(19) **Europäisches Patentamt**

**European Patent Office**

**Office européen des brevets**

(11) **EP 1 384 974 B1**

(12) **EUROPEAN PATENT SPECIFICATION**

(45) Date of publication and mention
of the grant of the patent:
**19.07.2006 Bulletin 2006/29**

(51) Int Cl.:
***G01B 11/00*** *(2006.01)* ***G01M 13/04*** *(2006.01)*

(21) Application number: **02720563.2**

(86) International application number:
**PCT/JP2002/004004**

(22) Date of filing: **22.04.2002**

(87) International publication number:
**WO 2002/090885 (14.11.2002 Gazette 2002/46)**

(54) **METHOD AND DEVICE FOR DETECTING INSTALLATION POSITION OF DRIVE SHAFTING IN MARINE PROPELLING DEVICE, AND PROGRAM FOR DETECTING THE INSTALLATION POSITION**

VERFAHREN UND EINRICHTUNG ZUR ERKENNUNG DER INSTALLATIONSPOSITION VON ANTRIEBSWELLEN IN SCHIFFSPROPELLEREINRICHTUNGEN UND PROGRAMM ZUR ERKENNUNG DER INSTALLATIONSPOSITION

PROCEDE ET DISPOSITIF DE DETECTION D'EMPLACEMENT D'INSTALLATION D'UN ARBRE D'ENTRAINEMENT DANS UN DISPOSITIF D'HELICE MARINE, ET PROGRAMME DE DETECTION D'EMPLACEMENT D'INSTALLATION

(84) Designated Contracting States:
**DK FI**

(30) Priority: **01.05.2001 JP 2001133744**
**06.11.2001 JP 2001340095**

(43) Date of publication of application:
**28.01.2004 Bulletin 2004/05**

(73) Proprietor: **Hitachi Zosen Corporation**
**Osaka-shi,**
**Osaka 559-0034 (JP)**

(72) Inventor: **SUGIMOTO, Iwao,**
**HITACHI ZOSEN CORPORATION**
**Suminoe-ku, Osaka-shi, Osaka 59-0034 (JP)**

(74) Representative: **Engelhardt, Harald**
**le Vrang & Engelhardt,**
**Fliederstrasse 1**
**85139 Wettstetten (DE)**

(56) References cited:
**EP-A1- 0 015 654** **JP-A- 7 318 459**
**JP-A- 8 091 283** **JP-A- 2000 028 348**
**JP-A- 2000 088 709** **JP-A- 2001 039 382**

**Description**

Technical Field

The present invention relates to a method of detecting an installation height of a driving shaft system in a large engine or a marine propulsion device having such an engine, a detector, and a program for detecting an installation height.

Background Art

In general, when an engine is installed in a ship, it is necessary to accurately detect the center positions of a crankshaft and a propeller shaft for rotating a propeller.

Therefore, devices for adjusting the center positions of crankshafts have been proposed. Since propeller shafts have been readily installed as compared with crankshafts, operators have adjusted the center positions manually without using any devices.

Incidentally, as a conventional device for adjusting the center position of a crankshaft or an installation height thereof, an automatic centering measuring device for a main engine has been disclosed in Japanese Patent Laid-Open No. 8-91283.

The automatic centering measuring device is configured such that distortion sensors are attached respectively between opposing surfaces of a pair of fore-and-aft couplings connecting a main engine (diesel engine) and a propeller shaft and between crank arms of the main engine, the crankshaft is rotated once, a displacement (displacement in an axial direction) on a position at a prescribed angle is detected relative to a reference position, the displacement is retrieved by a computer device, the detected displacement is subsequently visualized on a screen, and the height of the bearing on the crankshaft is adjusted depending upon experience of an operator who views a visualized graph.

According to the configuration of the automatic centering measuring device, crank arms having a displaced distance can be detected to specify a bearing to be subjected to height adjustment on the crankshaft. However, it is not possible to specify a degree of height adjustment, that is, the position of the crankshaft cannot be accurately detected. Hence, actual height adjustment depends upon experience of an operator and thus the adjustment cannot be quickly performed with accuracy on a driving shaft system including a propeller shaft.

For this reason, the present invention has as its objective the provision of a method of detecting an installation height of a driving shaft system in a marine propulsion device, an installation height detector, and a program for detecting an installation height whereby installation heights of a crankshaft and a propeller shaft can be quickly detected with accuracy.

Disclosure of Invention

A first method of detecting an installation height of a driving shaft system in a marine propulsion device according to the present invention, the method detecting an installation height of the driving shaft system in the marine propulsion device comprising a propeller shaft and an engine for a ship having a plurality of pistons arranged in series, is characterized in that the method comprises the steps of:

inputting a measured value of a displacement (hereinafter, referred to as crankshaft deflection) between crank arms, the displacement being actually measured on crank throws corresponding to pistons, inputting a measured value of a bearing load obtained by lifting a part of the propeller shaft near a bearing, the propeller shaft rotating a propeller, setting temporarily installation heights as data regarding bearings other than a reference bearing at a reference installation height on the crankshaft and the propeller shaft, calculating crankshaft deflection on each crank throw and bearing loads on the propeller shaft by using transfer-matrix method based on the temporary installation heights, calculating an evaluation value based on a difference between the calculated deflection value and the measured deflection value and a difference between a calculated bearing load value obtained in the calculating step and the measured bearing load value, deciding whether an evaluation value calculated in the calculating step is within a permissible range or not, and producing another temporary installation heights by using a genetic algorithm when the deciding step decides that the evaluation value is out of the permissible range, and the step of calculating crankshaft deflection and a bearing load is performed based on the newly produced temporary installation heights, the step of producing temporary installation heights by using the genetic algorithm is repeated until the evaluation value enters the permissible range, and a temporary installation height is detected as an installation height of the crankshaft when an evaluation value is within the permissible range.

Further, in the first method of detecting an installation height, a second method of detecting an installation height of the driving shaft system in the marine propulsion device is characterized in that the steps of setting a temporary installation height of the bearing to deciding an evaluation value are repeated for two or more times, and

when temporary installing heights are set, at the first calculation, a set height range of installation heights and a height interval are set widely relative to the reference height of the reference bearing, the permissible range for making decision in the deciding step is also set widely, and at a subsequent calculation, the set height range of installation heights, the height interval, and the permissible range set in the previous calculation are set narrowly to calculate an installation height.

A first detector for detecting an installation height of a driving shaft system in a marine propulsion device according to the present invention, the detector detecting an installation height of the driving shaft system in the marine propulsion device comprising a propeller and an engine for a ship having a plurality of pistons arranged in series, is characterized in that the detector comprises:

crankshaft deflection measuring means for measuring a displacement (hereinafter, referred to as crankshaft deflection) between crank arms on each crank throw in the engine, bearing load measuring means for measuring a bearing load on a bearing for supporting a propeller shaft, temporary installation height setting means for temporarily setting installation heights of a crankshaft and the propeller shaft as data, deflection/load calculating means for calculating crankshaft deflection serving as a displacement between crank arms on each crank throw and a bearing load of the bearing on the propeller shaft based on temporary installation heights obtained by the temporary installation height setting means by using transfer-matrix method, evaluation value calculating means for calculating an evaluation value based on a difference between a calculated deflection value obtained by the deflection/load calculating means and a measured deflection value obtained by the crankshaft deflection measuring means and a difference between a calculated bearing load value obtained by the deflection/load calculating means and a measured bearing load value obtained by the bearing load measuring means, deciding means for deciding whether an evaluation value obtained by the evaluation value calculating means is within a permissible range or not and deciding that the temporary installation heights are positioned at installation heights of the crankshaft and the propeller shaft when the evaluation value is within the permissible range, and installation height producing means for producing another temporary installation heights by performing a genetic algorithm on the temporary installation heights when the deciding means decides that the evaluation value is out of the permissible range, and

when the installation height producing means produces another temporary installation heights, a calculated deflection value and a calculated bearing load value are obtained by using the temporary installation heights, and the step of producing temporary installation heights by using the genetic algorithm is repeated until the evaluation value enters the permissible range, the evaluation value being based on a difference between a calculated deflection value and a measured deflection value and a difference between a calculated bearing load value and a measured bearing load value.

Further, in the first detector for detecting an installation height, a second detector for detecting an installation height of the driving shaft system in the marine propulsion device is characterized in that the detector comprises parameter setting means for setting a set height range and a height interval when the temporary installation height setting means sets temporary installation heights and setting a permissible range for deciding an evaluation value of installation heights, final deciding means for further deciding whether the evaluation value is within a target permissible range or not when the deciding means decides that an evaluation value is within the permissible range, and repeating for two or more times means for repeating the steps of setting temporary installation heights by the temporary installation height setting means to deciding an evaluation value by the final deciding means when the final deciding means decides that an evaluation value is out of the target permissible range, and

when the temporary installation height setting means sets temporary installation heights, at the first calculation, a set height range of installation heights and a height interval are set widely relative to a reference height of a reference bearing by the parameter setting means, the permissible range for decision of the deciding means is also set widely, and at a subsequent calculation, the set height range, the height interval, and the permissible range set in the previous calculation are set narrowly.

Moreover, a first program for detecting an installation height of a driving shaft system in a marine propulsion device according to the present invention, the program causing a computer device to calculate an installation height of the driving shaft system in the marine propulsion device comprising a propeller shaft and an engine for a ship having a plurality of pistons arranged in series based on a displacement (hereinafter, referred to as crankshaft deflection) between crank arms and a load of a bearing for supporting the propeller shaft is characterized in that the program comprises the steps of:

inputting a measured value of crankshaft deflection and a measured value of a bearing load of the bearing on the propeller shaft, the crankshaft deflection serving as a displacement between the crank arms and being actually measured on crank throws corresponding to pistons, setting temporarily installation heights of the bearings other than the reference bearing at the reference installation height on the crankshaft and the propeller shaft, a deflection/load calculating step of calculating crankshaft deflection and a bearing load on each crank throw by using transfer-matrix method based on the temporary installation heights set in the temporary installation height setting step, an evaluation value calculating step of calculating an evaluation value based on a difference between a calculated deflection value obtained in the deflection/load calculating step and the measured and inputted deflection value and a difference between a calculated bearing load obtained by the calculating section and the measured and inputted bearing load, a deciding step of deciding whether an evaluation value calculated in the evaluation value calculating step is within a permissible range or not, an installation height producing step of newly producing temporary installation heights by using a genetic algorithm when the deciding step decides that the evaluation value is out of the permissible range, and

a command step of permitting the deflection/load calculating step to calculate crankshaft deflection and a bearing load based on the newly produced temporary installation heights and repeating the step of producing temporary installation heights by using the genetic algorithm in the installation height producing step until the evaluation value enters the permissible range.

Further, in the first program for detecting an installation height, a second program for detecting an installation height of the driving shaft system in the marine propulsion device is characterized in that the program comprises:

a parameter setting step of setting a set height range and a height interval when temporary installation heights are set in the temporary installation height setting step and a permissible range when decision is made on an evaluation value of installation heights, a final deciding step of further deciding whether an evaluation value is within a target permissible range or not when the deciding step decides that the evaluation value is within the permissible range, a repeating step of repeating for two or more times the step of setting temporary installation heights in the temporary installation height setting step to the step of making decision on an evaluation value in the final deciding step when the final deciding step decides that an evaluation value is out of the target permissible range, and

when temporary installation heights are set in the temporary installation height setting step, at the first calculation, a set height range of installation heights and a height interval are set widely relative to a reference height of a reference bearing in the parameter setting step, the permissible range for decision in the deciding step its set widely, and at a subsequent calculation, the set height range, the height interval, and the permissible range set in the previous calculation are set narrowly.

According to the above-described configuration of the present invention, when installation heights of the crankshaft and the propeller shaft are detected, installation heights of the bearings are temporarily set in advance, crankshaft deflection on each crank throw and a bearing load on the propeller shaft are calculated based on the temporary installation heights by using transfer-matrix method, an evaluation value is calculated based on a difference between the calculated deflection value and a measured deflection value and a difference between a calculated bearing load and an actually measured bearing load, and it is decided whether the evaluation value is within the permissible range or not. When all the evaluation values are out of the permissible range, processing of the genetic algorithm is performed on all the temporary installation heights to produce another temporary installation heights, and a deflection value is calculated again. Thus, as compared with the conventional art in which decision is made depending upon experience of an operator, it is possible to quickly detect installation heights of the crankshaft and the propeller shaft with accuracy.

Further, the steps of setting temporary installation heights of the bearings to deciding an evaluation value are repeated for two or more times. At the setting of temporary installation heights, a set height range and a height interval are set widely at the initial calculation and the permissible range for making decision is also set widely. At a subsequent calculation, the set height range of installation heights, the height interval, and the permissible range that have been set in the previous calculation are set narrowly. Thus, calculation time can be shortened.

Brief Description of Drawings

FIG. 1 is a schematic structural view showing a marine propulsion device which is a detection target of a preferred method of detecting an installation height according to the present invention;

FIG. 2 is a block diagram showing a schematic structure of an installation height detector of the marine propeller device;

FIG. 3 is a block diagram showing a schematic structure of a crankshaft deflection measuring device in the installation height detector;

FIG. 4 is a side view showing a state of installing a measuring section onto a crankshaft in the crankshaft deflection measuring device;

FIG. 5 is a view showing a measured position of the measuring section on the crankshaft in the crankshaft deflection measuring device;

FIG. 6 is a side view for explaining a method of measuring a bearing load on a propeller shaft in the marine propulsion device;

FIG. 7 is a side view showing the method of measuring a bearing load on the propeller shaft in the marine propulsion device;

FIG. 8 is a graph showing measurement data of bearing loads;

FIG. 9 is a general diagram showing global coordinate systems of the crankshaft;

FIG. 10 is a schematic front view showing the crankshaft on one crank throw;

FIG. 11 is a schematic side view showing local coordinate systems of the crankshaft;

FIG. 12 is a flowchart showing the detailed steps of detecting an installation height of a driving shaft system in the marine propulsion device; and

FIG. 13 is a schematic view showing the.steps of calculating crankshaft deflection on the crankshaft.

Best Mode for Carrying Out the Invention

The following will describe the detail of the present invention in accordance with the accompanied drawings.

The present invention relates to detection of an installation height of a driving shaft system in a marine propulsion device constituted by an engine for a ship, a propeller, and so on. The detection targets are a crankshaft in an engine for a ship and a propeller shaft for rotating a propeller.

In the following explanation, after description on detection of a crankshaft, detection of a propeller shaft will be discussed

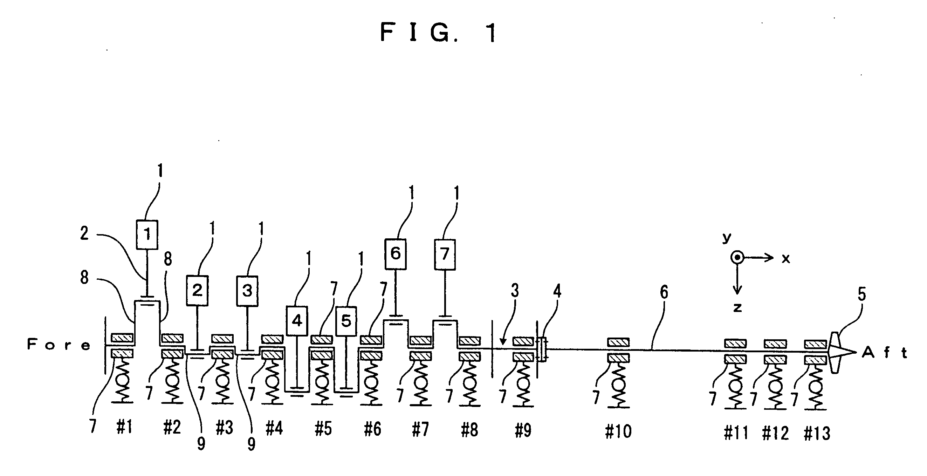

FIG. 1 shows a specific example of a driving shaft system which is a detection target.

The driving shaft system includes a crankshaft 3 on which two or more pistons 1 are connected via connecting rods 2, a propeller shaft 6 which is connected to the crankshaft 3 via a flange 4 and rotates a propeller 5, and bearings 7 of the shafts 3 and 6.

In an engine for a ship, at least eight bearings 7 are provided for supporting the crankshaft 3, and for example five bearings 7 are provided for supporting the propeller shaft 6. Hereinafter, the nine bearings 7 for supporting the crankshaft 3 will be represented by #1 to #9, and the four bearings 7 for supporting the propeller shaft 6 will be represented by #10 to #13.

Further, among the bearings 7, the bearing 7(#1) on the fore side and the two bearings 7(#12, #13) on the stern tube side are regarded as reference bearings, the installation height of these bearings 7 is assumed to be a reference installation height (height=0) and is fixed. Additionally, the bearings 7 (#12, #13) on the stern tube side are assumed to be fixed because a person cannot come close to the bearings once assembling is completed. Namely, this is because measurements cannot be performed on the bearings in a normal condition.

Therefore, installation heights in the driving shaft system are detected as center heights of the bearings 7 on ten points (#2 to #11) other than three points on the fore side and the aft side.

The following will discuss an installation height detector of the driving shaft system.

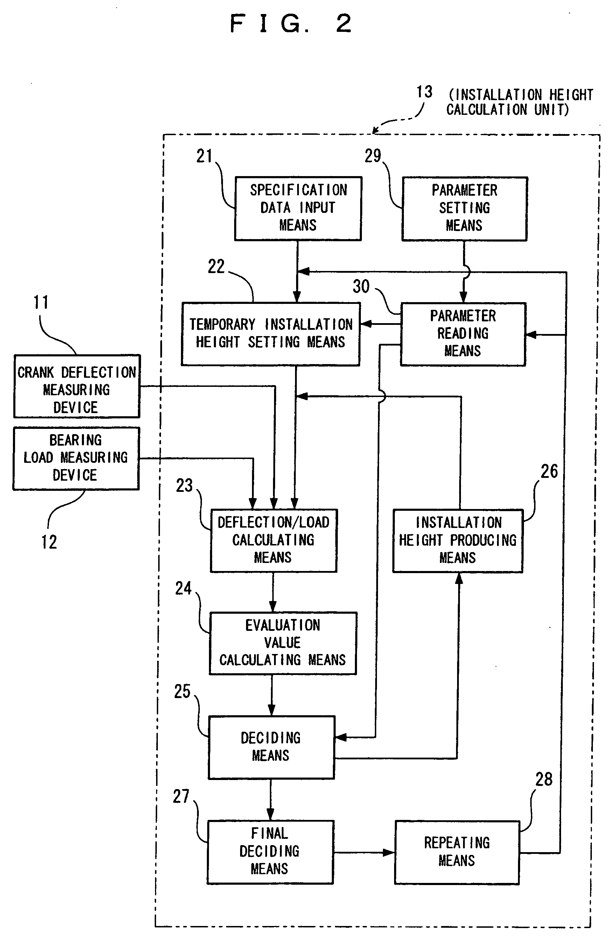

As shown in FIG. 2, the installation height detector is mainly constituted by a crankshaft deflection measuring device 11 for measuring a displacement between crank arms in an engine for a ship (also referred to as crankshaft deflection and will be referred to as crankshaft deflection), a bearing load measuring device 12 for measuring a load (hereinafter, referred to as a bearing load) imposed on the bearings 7 (#9 to #11) for supporting the propeller shaft 6, and an installation height calculation unit 13 which calculates crankshaft deflection and a bearing load based on a temporarily set installation height, evaluates the temporary installation height by comparing the calculated deflection value and the calculated load value, and measured deflection values and measured load value inputted from the crankshaft deflection measuring device 11 and the bearing load measuring device 12, and detects an evaluated value as the most accurate installation height.

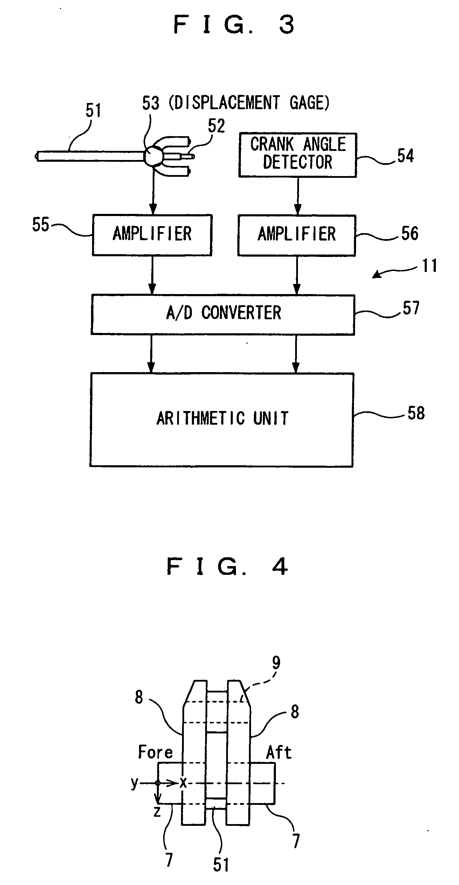

As shown in FIGS. 3 and 4, the crankshaft deflection measuring device 11 is constituted by a mounting body 51 which is shaped like a letter Y and is inserted between the crank arms 8, a measuring bar 52 which is placed on a bifurcated part of the mounting body 51 and freely advances and retreats from the bifurcated part via a spring, a displacement gage 53 which is mounted on the mounting body 51 and detects an advancing/retreating amount of the measuring bar 52 as an electric signal, a crank angle detector (e.g., a rotational pulse meter is used) 54 for detecting a rotation angle of the crankshaft 3, and an arithmetic unit 58 which inputs detection signals from the displacement gage 53 and the crank angle detector 54 respectively via amplifiers 55 and 56 and an A/D converter 57 and calculates crankshaft deflection at a prescribed crank angle. Besides, as with the measuring bar 52, both ends of the bifurcated part of the mounting body 51 are arranged so as to freely advance and retreat.via springs. This arrangement is provided for holding the mounting body 51 between the crank arms 8. Therefore, the spring placed on the measuring bar 52 is larger in pressing force than the springs placed on both ends of the bifurcated part of the mounting body 51.

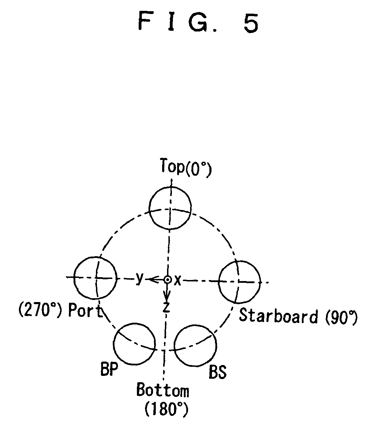

When crankshaft deflection is measured by the crankshaft deflection measuring device 11, as shown in FIGS. 4 and 5, after the mounting body 51 is set between the crank arms 8 on the opposite side from the crank pin 9, substantially one rotation is made and crankshaft deflection is measured when the crank pin 9 is positioned at the top (Top at 0°) and the bottom (Bottom at 180°).

Incidentally, when the bottom is actually measured, the connecting rod interferes with measurement. Thus, measurement is made on two points of BS (Starboard of Bottom) and BP (Port of Bottom) which are slightly displaced from the bottom in a horizontal direction, and an average value of the measured values on the two points is taken as a measured value of the bottom.

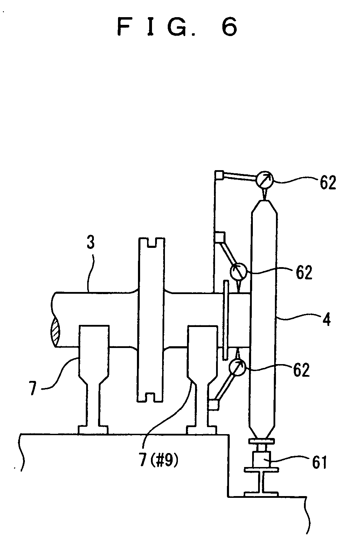

As shown in FIG. 6, the bearing load measuring device 12 is constituted by a hydraulic jack 61 which is placed near the bearing 7 and directly or indirectly lifts (jacks up) the propeller shaft 6, and dial gages 62 for measuring a displacement of the propeller shaft 6.

FIG. 6 shows the case in which a bearing load is measured at the flange 4 for connecting the crankshaft 3 and the propeller shaft 6 and at the #9 bearing 7 for supporting the crankshaft 3. The flange 4 is lifted as a shaft part near the bearing 7 by the hydraulic jack 61 and a measurement is performed. Besides, any one of two or more dial gages 62 may be used.

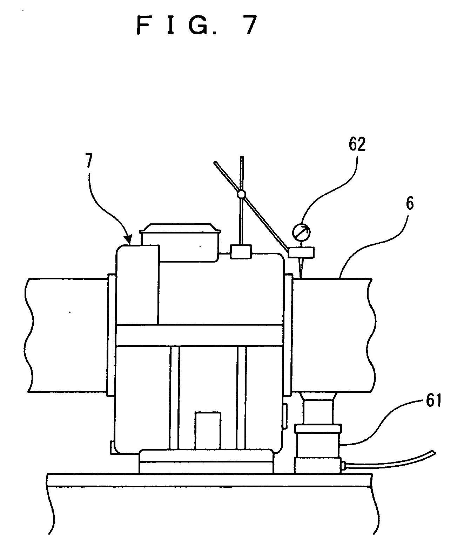

Moreover, as shown in FIG. 7, when bearing loads are measured on the bearings 7 (#10 and #11) placed at the midpoint of the propeller shaft 6, a shaft part near the bearing 7 is lifted by the hydraulic jack 61 and a measurement is performed.

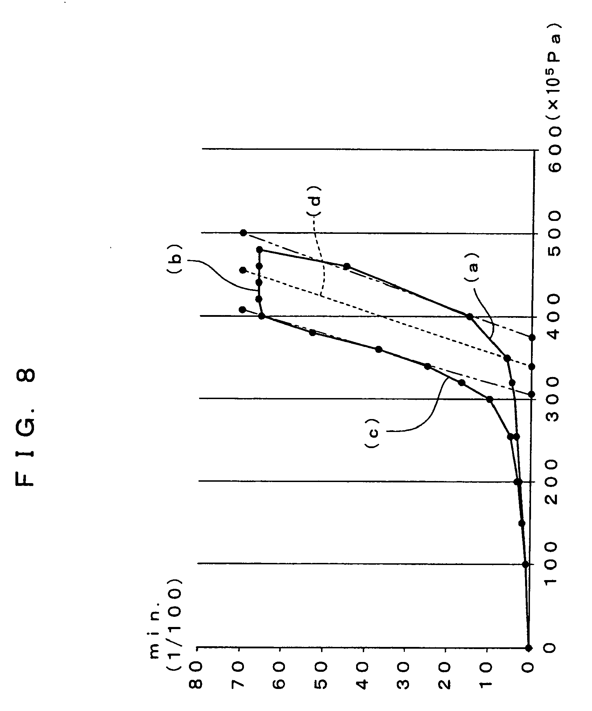

The following will specifically discuss the measuring method. As indicated by a curve (a) of FIG. 8, the hydraulic jack 61 is gradually increased in pressure. For example, when an indicated value of the dial gage 62 reaches around a value (0.70 mm) close to the maximum spacing (0.80 mm) between the shaft part and the bearing, the pressure is gradually reduced as indicated by a curve (b). Then, after a horizontal state is maintained firstly, as indicated by a curve (c), the pressure decreases in parallel with the increase. Then, the horizontal state is substantially obtained and the indicated value of the dial gage 62 is finally reaches around 0.

Then, after a straight line (d) passing through a midpoint between the increase and the decrease is obtained, a point where the straight line (d) crosses the lateral axis, that is, a pressure on a point having a spacing of 0 is decided as a load for supporting the shaft part on the bearing 7. In the case of FIG. 8, the pressure is $340 \times 10^5$ Pa (340 bar) . The obtained pressure $340 \times 10^5$ Pa (340 bar) is the pressure:of the hydraulic jack. A bearing load can be calculated by multiplying the pressure by areas receiving hydraulic pressure.

Next, the installation height calculation unit 13 will be discussed.

The installation height calculation unit 13 is constituted by a computer device, data input means such as a keyboard, output means such as an image display device, storage means for storing various programs for computation and data.

The installation height calculation unit 13 previously sets installation heights of the bearings 7 at proper temporary values relative to a reference height (zero), calculates crankshaft deflection on the crankshaft 3 and a bearing load on the propeller shaft 6 based on the temporary installation heights by using arithmetic equations, evaluates a difference between the calculated deflection value and the calculated bearing load value, and a measured deflection value obtained by the crankshaft deflection measuring device 11 and a measured bearing load value obtained by the bearing load measuring device 12, respectively, and decides whether the set temporary installation heights are proper or not. When the heights are found to be improper, the temporary installation heights are changed and the calculation is repeated until the heights enter a proper range.

Incidentally, for "installation height of the bearing", a phase "data string" is used which means successive pieces of numerical data having installation heights of a plurality of bearings.

As shown in FIG. 2, the installation height calculation unit 13 is constituted by specification data input means 21 which inputs specification data of the crankshaft 3, for example, various kinds of data including the number of cylinders (pistons), a stroke, a mass (weight) of a crank throw (the crank arms and the crank pin that correspond to one piston), cross-sectional secondary moment, and polar moment of inertia of area, the dimensions of a journal, the crank pin, the crank arms and so on, and specification data of the propeller shaft 6, for example, various kinds of data including an elastic spring constant, cross-sectional secondary moment, and a concentrated load of the bearing, and the dimensions such as a shaft diameter and a shaft length, temporary installation height setting means 22 for setting a plurality of sets of data strings, for example, 46 sets of data strings of temporary installation heights on the bearings 7, deflection/load calculating means 23 for calculating crankshaft deflection corresponding to each crank throw and a bearing load on the bearing 7 of the propeller shaft 6 by using the temporary installation heights (data string) set by the temporary installation height setting means 22, evaluation value calculating means 24 which calculates a total evaluation value in consideration of a deflection evaluation value and a load evaluation value, the deflection evaluation value being based on a difference between a calculated deflection value obtained by the deflection/load calculating means 23 and a measured deflection value measured by the crankshaft deflection measuring device 11, the load evaluation value being based on a difference between a calculated bearing load obtained by the deflection/load calculating means 23 and a measured bearing load value measured by the bearing load measuring device 12, deciding means 25 which inputs a total evaluation value calculated by the evaluation value calculating means 24 and a permissible value set in advance (an example of a permissible range that is set as a lower limit value or an upper limit value depending upon an evaluation expression, and in this case, the permissible value is set as a lower limit value), decides that a set temporary installation height is proper and outputs the decision when the total evaluation value exceeds the permissible value (within the permissible range), and decides that a set temporary installation height is improper when the total evaluation value is equal to or lower than the permissible value (out of the permissible range), installation height producing means 26 which produces (estimates) another temporary installation height by performing a genetic algorithm (genetic operation) on the set temporary installation height when the deciding means 25 decides that the total evaluation value is out of the permissible range, final deciding means 27 which decides whether the total evaluation value is within a final permissible value (a final permissible range, a target permissible value range) (this value is also set as a lower limit value or an upper limit value depending upon an evaluation expression, and in this case, the value is set as a lower limit value) when the deciding means 25 decides that the total evaluation value is within the permissible range, and repeating means 28 for repeating the steps (calculations) of setting a temporary installation height in the temporary installation height setting means 22 to deciding a final evaluation value in the final deciding means 27 for two or more times (e.g., four times) when the final deciding means 27 decides that a total evaluation value is out of the final permissible range (when a total evaluation value is equal to or lower than the final permissible value). Further, the temporary installation height setting means 22 comprises parameter setting means 29 which sets and stores a set height range and a height interval when the temporary installation height setting means 22 sets two or more sets of data strings of temporary installation heights, and sets and stores two or more sets of (two or more values) permissible values when the deciding means 25 decides an evaluation value of the temporary installation height, and parameter reading means 30 which reads the set height range, the height interval, and the permissible value stored in the parameter setting means 29 into the temporary installation height setting means 22 and the deciding means 24, the reading being performed in accordance with the number of times of repeating when the prescribed steps are repeated by the repeating means 28. Additionally, when a parameter is read by the parameter reading means 30, that is, when sets of data strings of temporary installation heights are set by the temporary installation height setting means 22, a height interval and a set height range of temporary installation heights relative to a reference height on a reference bearing are set widely (roughly or largely) at the initial calculation, and a permissible range in the decision of the deciding means 225 is also set widely (roughly or largely). At a subsequent calculation, the set height range of installation heights, the height interval, and the permissible range that are set in the previous calculation are set narrowly (precisely or small).

The following will discuss the detail of the temporary installation height setting means 22 and the deflection/load calculating means 23.

In the temporary installation height setting means 22, an installation height of the first bearing (reference bearing) 7 (#1) on the fore side is set at 0 as a reference value, and regarding the total of seven second to eighth bearings 7 (#2 to #8) adjacent to the above bearing 7, installation heights are temporarily set at -0.400 mm to +0.375 mm with a 0.025-mm spacing (also referred to as a height interval) by using a random function and so on.

The above set height range and height interval are provided for the following reason: when a more proper temporary installation height is calculated by the installation height producing means 26 using the genetic algorithm, the installation height is expressed in binary code of "0" and "1" . When the above -0.400 mm to +0.375 mm range is converted into a numerical form with the 0.025-mm spacing, 32 levels are obtained. Five bits (32 levels) are necessary for expressing the range in a binary code of "0" and "1". Namely, the installation heights of the bearings 7 (#2 to #8) other than the reference bearing 7 (#1) can be expressed by 5-bit data and thus the heights of the seven bearings 7 can be expressed as combined data strings (pieces of data indicating the heights of the seven bearings.are arranged in series) in 35-bit data (5 bits x seven bearings). Additionally, an installation height is converted into a binary code only when the genetic algorithm is used.. In the other operations, an installation height is expressed in decimal number. Certainly, when installation heights of the plurality of bearings 7 are expressed in decimal numbers in combination, the installation heights are referred to as data strings.

Then, data strings concerning firstly set temporary installation heights of the bearings 7 are provided in one set or more, for example, in 46 sets (certainly, the' number of sets is not limited to 46 and is properly increased or decreased).

In the deflection/load calculating means 23, crankshaft deflection on each crank throw is calculated by computation using transfer-matrix method based on temporary installation heights, and a bearing load is similarly calculated by computation using the transfer-matrix method. Additionally, as to the propeller shaft 6, a field transfer matrix is used for a shaft part between the bearings and a point transfer matrix is used for the bearings.

The following description will be divided into a method of calculating crankshaft deflection and a method of calculating a bearing load.

First, the method of calculating crankshaft deflection will be discussed.

In the transfer-matrix method, when displacements (also referred to as a state quantity) are calculated over the parts of the crankshaft 3, a field transfer matrix equation (coefficient is referred to as a field transfer matrix) is used for transferring displacement on a straight line such as a beam, and a point transfer matrix equation (coefficient is referred to as a point transfer matrix) is used for transferring displacement on a supporting point (changing position of a member on the bearing or in the axial direction) interrupting a continuing beam.

In the above explanation, the transfer-matrix method is used.along the.crankshaft 3. The direction along the crankshaft center (also serving as the shaft center of the journal) is used as global coordinate systems (expressed by x, y, and z and also referred to as absolute coordinate systems) and the direction along the crank arms 8 and the crank pins 9 is used as local coordinate systems (expressed by x, t, and r and is also referred to as relative coordinate systems).

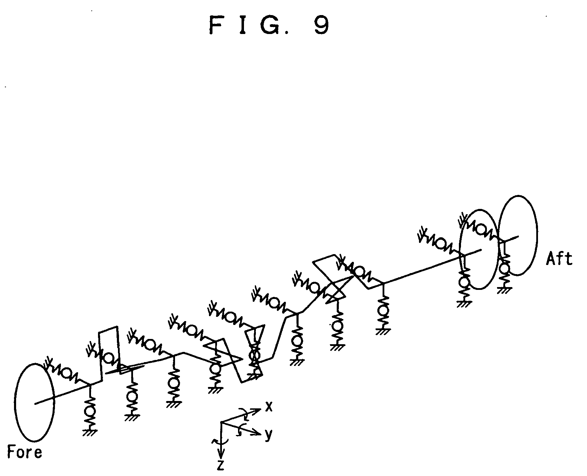

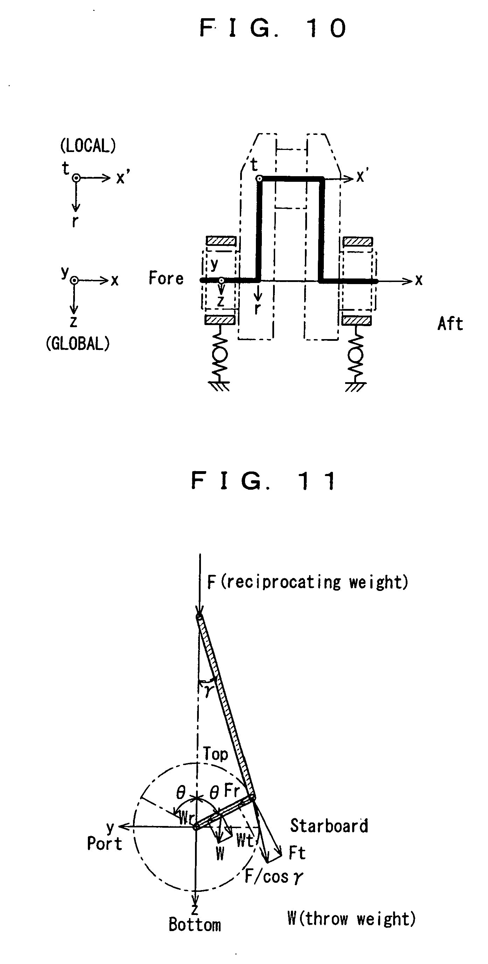

Besides, FIG. 9 is a general view (global coordinate systems) showing a model of the crankshaft 3, FIG. 10 shows how global coordinate axes are set for one crank throw, and FIG. 11 shows that force applied to the crank throw is divided on the local coordinate systems.

The following reference characters will not be particularly mentioned in the explanation below.

| | |
|---|---|
| a: | initial length between the crank arms |
| A: | cross-sectional area |
| D: | distance between the crank arms |
| Def: | crankshaft deflection |
| E: | modulus of longitudinal elasticity |
| F: | shearing force |
| G: | modulus of shearing elasticity |
| I: | cross-sectional secondary moment |
| J: | polar moment of inertia of area |
| k: | stiffness of spring supports |
| L: | length |
| M: | bending moment |
| T: | twisting moment |
| $\theta$: | crank angle |

First, as shown in the equation below, an equation is produced with a state quantity (displacement and working force) B being set as an unknown on the bearing on the side of the fore. In the equation below, S represents a field transfer matrix, P represents a point transfer matrix, R represents a boundary matrix indicating a boundary condition on the side of the fore, and R' represents a boundary matrix on the side of the aft. These are all known matrixes.

$R'S_{ns}P_{ns-1}S_{ns-1} \cdots P_1S_1RB=0$

The subscript ns in the above equation indicates the number of sections on the shaft provided in the aft direction, the shaft being divided by the bearings.

Further, the state quantity B on the side of the fore is calculated by solving the above equation.

The state quantity B is equivalent to a displacement vector q and a force vector Q which will be discussed later. Hereinafter, the field transfer matrix equation and the point transfer matrix equation are repeatedly used with the state quantity serving as an initial value, and a state quantity is calculated over the crankshaft.

Namely, the displacement vector q and the force vector Q, which are state quantities in the global coordinate systems, are indicated in equations (1) and (2) below. Here, the vectors in the equations are indicated in boldface type.

$$ \mathbf{q} = \begin{bmatrix} d_x & d_y & d_z & \phi_x & \phi_y & \phi_z \end{bmatrix}^{\mathbf{T}} \qquad (1) $$

$$ \mathbf{Q} = \begin{bmatrix} T_x & M_y & M_z & F_x & F_y & F_z \end{bmatrix}^{\mathbf{T}} \qquad (2) $$

Here, in equation (1), $d_x$, $d_y$, and $d_z$ represent displacement, distortion, or the like, and $\phi_x$, $\phi_y$, and $\phi_z$ represent an angle of twist, a slope, or the like. In equation (2), $T_x$, $M_y$, and $M_z$ represent twisting moment, bending moment, or the like, and $F_x$, $F_y$, and $F_z$ represent axial force, shearing force, or the like.

Further, displacement vector q' and force vector Q', which.are state quantities of the local coordinate systems, are indicated in equations (3) and (4) below.

$$q' = [d_x \quad d_t \quad d_r \quad \phi_x \quad \phi_t \quad \phi_r]^T \qquad (3)$$

$$Q' = [T_x \quad M_t \quad M_r \quad F_x \quad F_t \quad F_r]^T \qquad (4)$$

Similarly, in equation (3), $d_x$, $d_t$, and $d_r$ represent displacement, distortion, or the like, and $\phi_x$, $\phi_t$, and $\phi_r$ represent an angle of twist or a slope, or the like. In equation (4), $T_x$, $M_t$, and $M_r$ represent twisting moment, bending moment, or the like, and $F_x$, $F_t$, and $F_r$ represent axial force, shearing force, or the like.

The following will discuss the field transfer matrix equation and the point transfer matrix equation that are used in the transfer-matrix method.

The point transfer matrix equation for calculating a state quantity from the fore (on the side of the fore indicated by a subscript "F" ) to the aft (on the side of the aft indicated by a subscript "A" ) is expressed by equation (5) below. Here, in equation (5), i represents a bearing number (a number of a section (shaft) divided by the bearings).

$$\begin{bmatrix} q \\ Q \\ 1 \end{bmatrix}_i^A = \begin{bmatrix} f_1 & f_2 & q_0^A \\ 0 & f_1 & Q_0^A \\ 0 & 0 & 1 \end{bmatrix}_i \begin{bmatrix} q \\ Q \\ 1 \end{bmatrix}_i^F \qquad (5)$$

where

$$f_1 = \begin{bmatrix} 1 & 0 & 0 & 0 & 0 & 0 \\ 0 & 1 & 0 & 0 & 0 & L \\ 0 & 0 & 1 & 0 & -L & 0 \\ 0 & 0 & 0 & 1 & 0 & 0 \\ 0 & 0 & 0 & 0 & 1 & 0 \\ 0 & 0 & 0 & 0 & 0 & 1 \end{bmatrix}$$

$$f_2 = \begin{bmatrix} 0 & 0 & 0 & \dfrac{-L}{EA} & 0 & 0 \\ 0 & 0 & \dfrac{-L^2}{2EI_z} & 0 & \dfrac{L^3}{6EI_z} & 0 \\ 0 & \dfrac{L^2}{2EI_y} & 0 & 0 & 0 & \dfrac{L^3}{6EI_y} \\ \dfrac{-L}{GJ} & 0 & 0 & 0 & 0 & 0 \\ 0 & \dfrac{-L}{EI_y} & 0 & 0 & 0 & \dfrac{-L^2}{2EI_y} \\ 0 & 0 & \dfrac{-L}{EI_z} & 0 & \dfrac{L^2}{2EI_z} & 0 \end{bmatrix}$$

Next, a coordinate transformation (transfer equation) for converting a state quantity from the global coordinate systems to the local coordinate systems is expressed by equation (6).

$$\begin{bmatrix} q' \\ Q' \\ 1 \end{bmatrix}_i = \begin{bmatrix} g_1 & 0 & 0 \\ 0 & g_1 & 0 \\ 0 & 0 & 1 \end{bmatrix} \begin{bmatrix} q \\ Q \\ 1 \end{bmatrix}_i \qquad (6)$$

where

$$g_1 = \begin{bmatrix} 1 & 0 & 0 & 0 & 0 & 0 \\ 0 & \cos\theta & -\sin\theta & 0 & 0 & 0 \\ 0 & \sin\theta & \cos\theta & 0 & 0 & 0 \\ 0 & 0 & 0 & 1 & 0 & 0 \\ 0 & 0 & 0 & 0 & \cos\theta & -\sin\theta \\ 0 & 0 & 0 & 0 & \sin\theta & \cos\theta \end{bmatrix}.$$

Meanwhile, a coordinate transformation (transfer equation) for converting a state quantity from the local coordinate systems to the global coordinate systems is expressed by equation (7) below.

$$\begin{bmatrix} q \\ Q \\ 1 \end{bmatrix}_i = \begin{bmatrix} g_2 & 0 & 0 \\ 0 & g_2 & 0 \\ 0 & 0 & 1 \end{bmatrix} \begin{bmatrix} q' \\ Q' \\ 1 \end{bmatrix}_i \qquad (7)$$

where

$$g_2 = \begin{bmatrix} 1 & 0 & 0 & 0 & 0 & 0 \\ 0 & \cos\theta & \sin\theta & 0 & 0 & 0 \\ 0 & -\sin\theta & \cos\theta & 0 & 0 & 0 \\ 0 & 0 & 0 & 1 & 0 & 0 \\ 0 & 0 & 0 & 0 & \cos\theta & \sin\theta \\ 0 & 0 & 0 & 0 & -\sin\theta & \cos\theta \end{bmatrix}$$

For example, a coordinate transformation (transfer equation) from the journal to the crank arm is expressed by equation (8) below.

$$\begin{bmatrix} q' \\ Q' \\ 1 \end{bmatrix}_{arm} = \begin{bmatrix} g_3 & 0 & 0 \\ 0 & g_3 & 0 \\ 0 & 0 & 1 \end{bmatrix} \begin{bmatrix} q' \\ Q' \\ 1 \end{bmatrix}_{journal} \qquad (8)$$

where

$$g_3 = \begin{bmatrix} 0 & 0 & -1 & 0 & 0 & 0 \\ 0 & 1 & 0 & 0 & 0 & 0 \\ 1 & 0 & 0 & 0 & 0 & 0 \\ 0 & 0 & 0 & 0 & 0 & -1 \\ 0 & 0 & 0 & 0 & 1 & 0 \\ 0 & 0 & 0 & 1 & 0 & 0 \end{bmatrix}$$

Further, equation (8) is also used for coordinate transformation from the crank arm to the journal.
Moreover, a coordinate transformation (transfer equation) from the crank pin to the crank arm is expressed by equation (9) below, and a coordinate transformation from the crank arm to the crank pin is also expressed by equation (9) below.

$$\begin{bmatrix} q' \\ Q' \\ 1 \end{bmatrix}_{pin} = \begin{bmatrix} g_4 & 0 & 0 \\ 0 & g_4 & 0 \\ 0 & 0 & 1 \end{bmatrix} \begin{bmatrix} q' \\ Q' \\ 1 \end{bmatrix}_{arm} \quad (9)$$

where

$$g_4 = \begin{bmatrix} 0 & 0 & 1 & 0 & 0 & 0 \\ 0 & 1 & 0 & 0 & 0 & 0 \\ -1 & 0 & 0 & 0 & 0 & 0 \\ 0 & 0 & 0 & 0 & 0 & 1 \\ 0 & 0 & 0 & 0 & 1 & 0 \\ 0 & 0 & 0 & -1 & 0 & 0 \end{bmatrix}$$

Incidentally, the point transfer matrix equation for the bearings 3 is expressed by equation (10) below.

$$\begin{bmatrix} q \\ Q \\ 1 \end{bmatrix}_{i+1}^{F} = \begin{bmatrix} 1 & 0 & 0 \\ h_1 & 1 & h_2 \\ 0 & 0 & 1 \end{bmatrix}_{i} \begin{bmatrix} q \\ Q \\ 1 \end{bmatrix}_{i}^{A} \quad (10)$$

where

$$h_1 = \begin{bmatrix} 0 & 0 & 0 & 0 & 0 & 0 \\ 0 & 0 & 0 & 0 & 0 & 0 \\ 0 & 0 & 0 & 0 & 0 & 0 \\ 0 & 0 & 0 & 0 & 0 & 0 \\ 0 & -k_y & 0 & 0 & 0 & 0 \\ 0 & 0 & -k_z & 0 & 0 & 0 \end{bmatrix}$$

$$h_2 = \begin{bmatrix} 0 & 0 & 0 & 0 & k_y d_{y0} & k_z d_{z0} \end{bmatrix}^T$$

A temporary installation height is substituted into $d_{z0}$ of $h_2$ ($d_{y0}$ is constant), and another installation height produced and changed by a genetic algorithm is inputted to $d_{z0}$ (the subscript "0" of d indicates an initial value).

The following will discuss the steps of calculating crankshaft deflection.

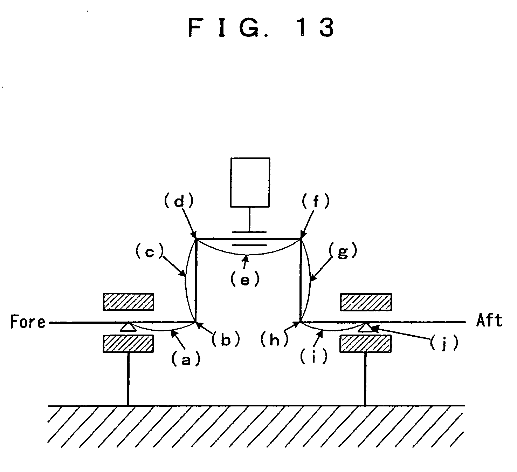

Here, assuming that $d_{x1}$, $d_{y1}$, and $d_{z1}$ are used as displacements on the side of the fore on the crank throw, $d_{x2}$, $d_{y2}$, and $d_{z2}$ are used as displacements on the side of the aft of the crank throw, and a represents an initial length of the crank throw, a distance D between the adjacent crank throws is expressed by equation (11) below (where the subscript 1 of d indicates (b) position of FIG. 13, which will be discussed later, and the subscript 2 indicates (h) position of FIG. 13).

$$D = \sqrt{(a + d_{x2} - d_{x1})^2 + (d_{y2} - d_{y1})^2 + (d_{z2} - d_{z1})^2} \qquad (11)$$

Moreover, assuming that a distance on the top dead center (TDC, 0°) of the piston is $D_0$ and a distance on the bottom dead center (BDC, 180°) of the piston is $D_{180}$, crankshaft deflection (Def) is expressed by equation (12) below.

$$Def = D_0 - D_{180} \qquad (12)$$

Incidentally, the order of a is $10^2$ mm and $d_x$, $d_y$, and $d_z$ are $10^{-3}$ mm. Thus, the above equation (11) can be transformed into equation (13) below.

$$D - a = \frac{2a(d_{x2} - d_{x1})}{D + a} + \frac{(d_{x2} - d_{x1})^2 + (d_{y2} - d_{y1})^2 + (d_{z2} - d_{z1})^2}{D + a}$$
$$= d_{x2} - d_{x1} \qquad (13)$$

where

$$D + a = 2a$$

$$\frac{(d_{x2} - d_{x1})^2 + (d_{y2} - d_{y1})^2 + (d_{z2} - d_{z1})^2}{D + a} \ll d_{x2} - d_{x1}$$

Therefore, crankshaft deflection can be calculated by equation (14) below.

$$Def = (d_{x2} - d_{x1})_0 - (d_{x2} - d_{x1})_{180} \qquad (14)$$

As shown in equation (14), crankshaft deflection mostly depends upon a deformation amount in the crankshaft'core direction.

Referring to FIG. 13, the following will discuss the specific steps of calculating crankshaft deflection in accordance with the above arithmetic equations

Here, the calculating steps of the members will be discussed in order while attention is focused on one crank throw.

First step: the field transfer matrix equation of equation (5) is used for a bearing (a).

Second step: for a bent part (b), the left side of equation (5) in the first step is substituted into the right side of the coordinate transformation of equation (6), and the left side of equation (6) at this moment is substituted into the right side (journal) of the coordinate transformation of equation (8).

Third step: for a crank arm (c), the left side of equation (8) in the second step is substituted into the right side of equation (5).

Fourth step: for a bent part (d), the left side of equation (5) in the third step is substituted into the right side of the coordinate transformation of equation (9).

Fifth step: for a crank pin (e), the left side of equation (9) in the fourth step is substituted into the right side of equation (5).

Six step: for a bent part (f), the left side of equation (5) in the fifth step is used as the left side of equation (9).

Seventh step: for a crank arm (g), the right side $[q'Q'1]^T_{arm}$ of equation (9) in the sixth step is substituted into equation (5).

Eighth step: for a bent part (h), the left side of equation (5) in the seventh step is used as the left side of equation (8), and the right side $[q'Q'1]^T_{journal}$ of equation (8) at this moment is substituted into the right side of the coordinate transformation of equation (7).

Ninth step: for a bearing (i), the left side of equation (7) in the eighth step is substituted into the right side of equation (5).

Further, for transfer from a crank throw 1 to an adjacent crank throw 2 (a supporting point on (j) serves as a boundary), the point transfer matrix equation of equation (10) is used and the transfer is performed by substituting the left side of equation (5) in step i into the right side of equation (10).

In this way, state quantities q and Q (Q=0) are transferred from the fore to the aft by the transfer matrixes which are coefficients of the transfer equations, so that displacements are calculated. Certainly, in the process of the transfer, Q is also changed by $f_1$, $f_2$, $h_1$, and $h_2$ of equation (5) and equation (10).

Next, the method of calculating a bearing load will be briefly discussed.

A bearing load [Brg(JB.K)] can be calculated by equation (15) below.

$$Brg(JB,K) = k(JB) \times \{d(JB,K) - d0(JB)\} \qquad (15)$$

The symbols of equation (15) will be described below.

Brg(JB,K) represents a bearing load (measured value) on the $JB_{th}$ bearing at a crank angle K, and k(JB) represents an elastic spring constant in the perpendicular direction of the $JB_{th}$ bearing, the constant being provided as input data (specification data).

Further, d(JB,K) represents a displacement in the perpendicular direction of the propeller shaft on the $JB_{th}$ bearing at the crank angle K, the displacement being provided as an arithmetic result.

Moreover, d0(JB) denotes an installation height relative to the reference height of the reference bearing on the $JB_{th}$ bearing, the height being provided as an arithmetic result (equal to an installation height of the bearing that is obtained by computation).

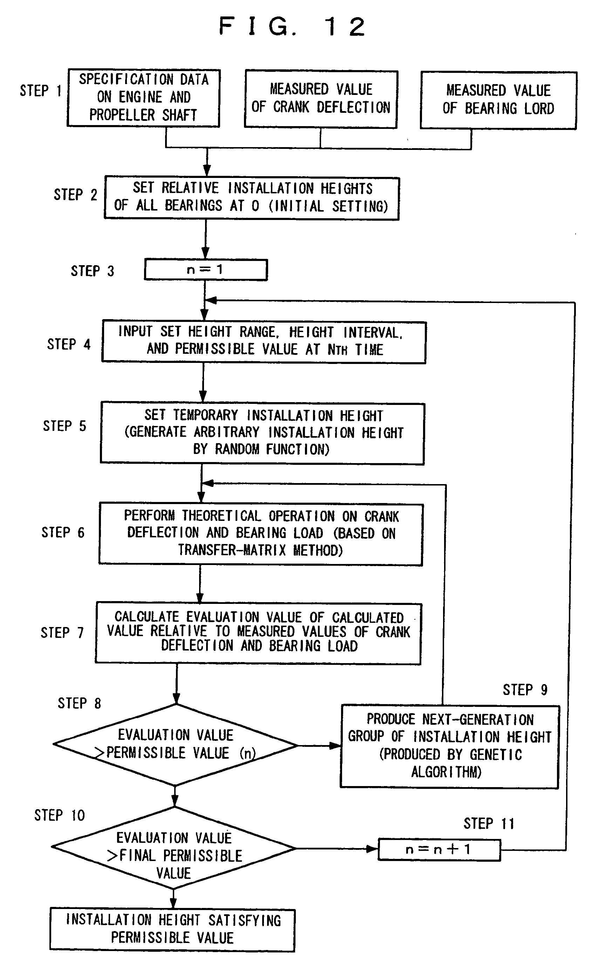

Next, the steps of detecting an installation height of the driving shaft system will be described in accordance with the schematic flow of FIG. 12.

Incidentally, when an installation height of the driving shaft system is detected, it is preferable to randomly produce a data string of temporary installation heights only once (first time) in advance before detection within a prescribed set height range with a prescribed height interval. In the following steps of detecting an installation height according to the present embodiment, in order to shorten calculation time, the calculating steps (procedures) are repeated for two or more times, a set height range and a height interval width are gradually reduced in each operation step, the range and width being used for conversion into a binary code (coding for processing of a genetic algorithm) when a set of data strings serving as initial data at the start of an operation is produced. Also, values in the permissible range are also gradually reduced (here, the set height range, the height interval, and the permissible range are all referred to as parameters). The following will describe the case where four calculating steps are provided (when the initial operation is counted, the number of repeats is actually three).

First, in step 1, the specification data of an engine and the propeller shaft, a measured value of crankshaft deflection, and a measured value of a bearing load on the propeller shaft are-inputted.

Besides, as described above, the specification data of the engine and the propeller shaft is inputted by the specification data input means 21. The specification data includes data concerning a cylinder required for computation, for example, the number of cylinders, a stroke, a mass of a crank throw, moment of inertia, and the dimensions of the journal, the crank pin, the crank arm and so on, and data concerning the propeller shaft 6, for example, various kinds of data including an elastic spring constant on the bearing, a cross-sectional secondary moment, and a concentrated load, and the dimensions of a shaft diameter, a shaft length, and so on.

Further, a measured value of crankshaft deflection is obtained by measuring crankshaft deflection at a prescribed crank angle position on each crank throw by the crankshaft deflection measuring device 11, and the measured deflection value is inputted.

Additionally, as a measured value of a bearing load on the propeller shaft 6, a load measured by the bearing load measuring device 12 is inputted.

Next, in step 2, the relative installation heights of all the bearings 7 are set at 0 as the initial setting.

Next, in step 3, a variable for counting the number of times of the calculating steps is set at "1".

Then, in step 4, a set height range, a height interval, and a permissible range that are previously determined for each of the calculating steps are read to the temporary installation height setting means 22 and the deciding means 25 by the parameter reading means 30 in accordance with the number of times of the calculating steps.

Additionally, as described above, although the setting height range of read temporary installation heights (permissible range of heights upon setting), the height interval, and the permissible range are firstly set as wide ranges, as the number of times of the calculating steps increases, the ranges are gradually set as narrower ranges. For example, in the first calculating step, the set height range of temporary installation heights is set at -6.4 to +6.0 mm and the height interval is set at 0.4 mm. In the second calculating step, the set height range of temporary installation heights is set at -1.6 to +1.5 mm and the height interval is set at 0.1 mm. In the third calculating step, the set height range of temporary installation heights is set at -0.80 to +0.75 mm and the height interval is set at 0.05 mm. In the fourth calculating step, the set height range of temporary installation heights is set at -0.40 to +0.375 mm and the height interval is set at 0.025 mm. Namely, in the third calculating step or later, the values are halved from the previous values

Next, in step 5, based on the set height range and height interval that are inputted in step 4, the temporary installation height setting means 22 produces, for example, 46 sets (temporary installation height data groups) of data strings of temporary installation heights of the bearings 7(#2 to #11) relative to the reference height.

Subsequently, in step 6, as described above, the deflection/load calculating means 23 calculates displacements $(d_{x1}, d_{y1}, d_{z1})$ on the fore side and displacements $(d_{x2}, d_{y2}, d_{z2})$ on the aft side on each crank throw by using transfer-matrix method. And then, crankshaft deflection is calculated by using equation (11) and equation (12), and a bearing load is also calculated similarly by using transfer-matrix method. Additionally, the field transfer matrix is used for the propeller shaft 6 between the bearings and a point transfer matrix is used for the bearings.

The method of calculating a bearing load will be briefly described below. A bearing load [Brg(JB,K)] can be calculated by equation (15) below.

$$\mathrm{Brg(JBI,K)=k(JB)\times\{d(JB,K)-d0(JB)\}} \qquad (15)$$

The symbols of equation (15) will be described below.

Brg (JB, K) represents a bearing load (measured value) on the $JB_{th}$ bearing at a crank angle K, and k(JB) represents an elastic spring constant in the perpendicular direction of the $JB_{th}$ bearing at a crank angle K, the constant being provided as input data (specification data).

Further, d(JB,K) represents a displacement in the perpendicular direction of the propeller shaft on the $JB_{th}$ bearing at a crank angle K, the displacement being provided as an arithmetic result.

Moreover, d0(JB) represents an installation height on the $JB_{th}$ bearing relative to the reference height of the reference bearing, the height being provided as an arithmetic result (equal to an installation height of the bearing that is obtained by computation).

Subsequently, in step 7, the evaluation value calculating means 24 calculates a deflection evaluation value based on a difference between a calculated deflection value and a measured deflection value and calculates a load evaluation value based on a difference between a calculated bearing load value and a measured bearing load value. Thereafter, in view of the evaluation values, for example, the evaluation values are added to obtain a total evaluation value.

Arithmetic equations for calculating the evaluation values are shown below.

A deflection evaluation value (Fitness$_{def}$) is calculated by equation (16) below.

$$\text{Fitness}_{def} = \sum_{i=1}^{n} \frac{n}{\left|\text{Def}_{measured}(i) - \text{Def}_{calculated}(i)\right|} \times (RA) \times 100\ (\%) \quad \cdots (16)$$

Def$_{measured}$(i): measurement result of crank deflection on the i$_{th}$ crank
Def$_{calculated}$(i) : arithmetic result of crank deflection on the i$_{th}$ crank
RA : required accuracy
n : total number of cylinders

A load evaluation value (Fitness$_{Brg}$) is calculated by equation (17) below

$$\text{Fitness}_{Brg} = \sum_{i=1}^{m} \frac{m}{\left|\text{Brg}_{measured}(i) - \text{Brg}_{calculated}(i)\right|} \times (RA) \times 100\ (\%) \quad \cdots (17)$$

Brg$_{measured}$(i) : measurement result of bearing load on the i$_{th}$ bearing
Brg$_{calculated}$(i) : arithmetic result of bearing load on the i$_{th}$ bearing
RA : required accuracy
m : total number of measured bearings

A total evaluation value (Fitness$_{all}$) is calculated by equation (18) below.

$$\text{Fitness}_{all} = \sum_{i=1}^{n} \frac{n \times (RC) \times 100}{\left|\text{Def}_{measured}(i) - \text{Def}_{calculated}(i)\right|}$$
$$+ \sum_{i=1}^{m} \frac{m \times (RB) \times 100}{\left|\text{Brg}_{measured}(i) - \text{Brg}_{calculated}(i)\right|}\ (\%) \quad \cdots (18)$$

RC : required accuracy of crank deflection
RB : required accuracy of bearing load

Next, in step 8, the total evaluation value calculated by the evaluation value calculating means 24 and widely set permissible values are compared with each other to decide whether the total evaluation value is within the permissible range or not.

Then, after decision is made on all the 46 sets of data strings, when a set of data strings is found with a total evaluation value exceeding the permissible value (within the permissible range), step 10 is performed and it is decided whether the total evaluation value exceeds a final permissible value or not.

Meanwhile, when all the 46 sets have total evaluation values equal to or lower than the permissible value (out of the permissible range), step 9 is performed and the installation height generating means 26 performs processing of a genetic algorithm on current temporary installation heights (46 sets of data strings) to produce another temporary installation heights (data strings as a next-generation group). Besides, since the genetic algorithm-processes codes of "0" and "1", an installation height of each bearing is expressed in binary number, and the data string of installation heights is produced by arranging the heights (binary data) of all the bearings in order.

Then, steps 6 to 8 are performed again. When a total evaluation value is equal to or lower than the permissible value, steps 6 to 8 are repeated after step 9 until the total evaluation value exceeds the permissible value.

In step 10, a total evaluation value and the final permissible value are compared with each other, when even one of the 46 sets of installation heights has a total evaluation value exceeding the final permissible value (when the total evaluation value is within a final permissible range), the installation height is out-putted.

Meanwhile, when a total evaluation value is equal to or lower than the final permissible value (when a total evaluation value is out of the final permissible range), the repeating means 88 adds 1 to the number of times (n) of calculations and the step 4 is performed again. In step 4, the parameter reading means 30 reads another installation height range, another height interval, and another permissible value for the second calculation to the temporary installation height setting means 22 and the deciding means 25.

Then, in step 5, after a random function is used again to set another data string of temporary installation heights, the above-described steps 6 to 10 are repeated. Namely, the above calculating steps are repeated for up to four times (until n=4 is obtained) until the total evaluation value exceeds the final permissible value. Certainly, the maximum number of times is not limited to four. Three times or less or five times or more are also acceptable.

Certainly, in step 10, when a total evaluation value exceeds the permissible value, the installation height is outputted.

As described above, when the installation heights of the crank shaft and the propeller shaft are detected, two or more sets (e.g., 46 sets) of data strings of installation heights on the bearings are set temporarily in advance, crankshaft deflection on each crank throw and a bearing load of the bearing on the propeller shaft are calculated based on the temporary installation heights by computation using transfer-matrix method, and a total evaluation value is calculated based on a difference between the calculated deflection value and an actually measured deflection value and a difference between a calculated bearing load value and an actually measured bearing load value. When even one of the sets has a total evaluation value within the permissible range, it is decided that the temporary installation heights of the set are proper. Meanwhile, when a total evaluation value is out of the permissible range, processing of the genetic algorithm is performed on all the temporary installation heights to set another temporary installation heights, and the steps of obtaining a calculated deflection value and a calculated bearing load value are performed again. Thus, as compared with the conventional art in which an installation height is estimated depending upon experience of an operator based on a measured deflection value, it is possible to quickly detect an installation height of the driving shaft system with accuracy.

Further, when calculation is repeated, parameters such as a set height range, a height interval, and a permissible value (permissible range) for setting a temporary installation height are set widely at the initial calculation and are gradually set narrowly. Hence, calculation time can be shortened.

Moreover, the installation height calculation unit of the present embodiment comprises a program for calculating (detecting) the installation heights of the crank shaft and the propeller shaft by using a computer device.

Namely, the program for calculating (detecting).the installation heights of the crank shaft and the propeller shaft comprises a specification data inputting step of inputting the specification data of the crankshaft 3 and the propeller shaft 6 to the calculation unit, a measured value inputting step of inputting a measured value of crankshaft deflection and a measured value of a bearing load of the bearing on the propeller shaft, the crankshaft deflection serving as a displacement between the crank arms that is actually measured on crank throws corresponding to pistons, a temporary installation height setting step of temporarily setting two or more sets of installation heights of the bearings other than the reference bearing at the reference installation height on the crankshaft and the propeller shaft, a deflection/load calculating step of calculating crankshaft deflection and a bearing load on each crank throw by using the transfer-matrix method based on the temporary installation heights set in the setting step, an evaluation value calculating step of calculating a total evaluation value based on a difference between a calculated deflection value obtained in the calculating step and the measured and inputted deflection value and a difference between a calculated bearing load obtained by the calculating step and the measured and inputted bearing load, a deciding step of deciding whether a total evaluation value calculated in the evaluation value calculating step is within the permissible range or not, an installation height producing step of newly producing a plurality of sets of temporary installation heights by using the genetic algorithm when the deciding step decides that the total evaluation values of the sets are all out of the permissible range, a command step of permitting the deflection/load calculating step to calculate crankshaft deflection and a bearing load based on the temporary installation heights newly produced in the installation height producing step and repeating the step of producing temporary installation heights by using the genetic algorithm in the installation height producing step until the total evaluation value enters the permissible range, a final deciding step of further deciding whether a total evaluation value is within the final permissible value (final permissible range) when the deciding step decides that even one of the sets has a total evaluation value within the permissible range and outputting installation heights (data string) of the set, a repeating step of repeating for two or more times the step of setting temporary installation heights in the temporary installation height setting step to the step of making decision on a final evaluation value in the final deciding step when the final deciding step decides that a total evaluation value is out of the final permissible range, a parameter setting step of setting and storing a set height range and a height interval when temporary installation heights are set in the temporary installation height setting step and a permissible range when decision is made on an evaluation value of installation heights, and a parameter reading step of reading the set height range, the height interval, and the permissible range stored in the parameter setting step into the temporary installation height setting step and the deciding step, the reading being performed in accordance with the number of times of repeating when the prescribed steps are repeated in the repeating step. When temporary installing heights are set in the installation height setting step, in the parameter setting step, the set height range of installation heights and the height interval are set widely relative to the reference height of the reference bearing at the first calculation, and the permissible range (permissible value) for making decision in the deciding step is set widely. At a subsequent calculation, the set height range of temporary installation heights, the height interval, and the permissible range (permissible value), that are set in the previous calculation are set narrowly. The program has a decoding function of converting installation height data into a binary code and returning installation data, which has been converted into a binary code, to decimal numbers (conversion to a denary code) when the genetic algorithm is used. Additionally, the parameters are changed step by step in the parameter setting step in order to shorten processing time. When processing time does not need to be shortened, the following processing is also applicable: the set height range is set widely, the height interval is set narrowly, and the permissible value and the final permissible value are made equal to each other, so that an installation height within the permissible range (preferably, an installation height of a set having the highest evaluation value) is outputted in response to decision of the deciding step without providing the final deciding step, the repeating step, the parameter setting step, and the parameter reading step.

Besides, the means of the installation height calculation unit 13 (e.g., the temporary installation height setting means, the deflection/load calculating means, the evaluation value calculating means, the deciding means, the installation height producing means, the final deciding means, the repeating means, the parameter setting means, the parameter reading means, and so on except for the input means) are each constituted by, for example, a general-purpose arithmetic circuit and a program for performing the steps in the means, or circuits for performing the steps (functions) in the means.

According to the method of detecting an installation height of the driving shaft system, the installation height detector of the driving shaft system in the marine propulsion device, and the program for detecting an installation height of the driving shaft system in the marine propulsion device, when installation heights of the crankshaft and the propeller shaft are detected., installation heights of the bearings are temporarily set as data in advance, crankshaft deflection on each crank throw and a bearing load on the propeller shaft are calculated based on the temporary installation heights by using transfer-matrix method, an evaluation value is calculated based on a difference between the calculated deflection value and a measured deflection value and a difference between a calculated bearing load and an actually measured bearing load, and it is decided whether the evaluation value is within the permissible range or not. When all the evaluation values are out of the permissible range, processing of the genetic algorithm is performed on all the temporary installation heights to produce another temporary installation heights, and a deflection value is calculated again. Thus, as compared with the conventional art in which decision is made depending upon experience of an operator, it is possible to quickly detect installation heights of the crankshaft and the propeller shaft.with accuracy.

Further, the steps of setting temporary installation heights of the bearings to deciding an evaluation value are repeated for two or more times. At the setting of temporary installation heights, a set height range and a height interval are set widely at the initial calculation and the permissible range (permissible value) for making decision is also set widely. At a subsequent calculation, the set height range of installation heights, the height interval, and the permissible range that have been set in the previous calculation are set narrowly. Thus, calculation time can be shortened.

Incidentally, the method of detecting an installation height of the driving shaft system and the installation height detector of the above embodiment are used to measure installation heights of the bearings on the crankshaft and bearing loads of the bearings on the propeller shaft,four example, when a ship is unloaded and loaded. Hence, it is possible to detect deformation on a hull. Therefore, when another ship is built next time, in view of the deformation, that is, deformation can be previously added in the opposite direction so as to extend the crankshaft and the propeller shaft nearly as straight lines while the ship is loaded.

Industrial Applicability

As described above, a method of detecting an installation height of a driving shaft system according to the present invention makes it possible to quickly detect installation heights of a crankshaft and a propeller shaft with accuracy. Hence, the present invention is suitable for operations of installing a marine propulsion device in a ship.

**Claims**

1. A method of detecting an installation height of a driving shaft system in a marine propulsion device comprising a propeller shaft and an engine for a ship having a plurality of pistons arranged in series, wherein the method comprises the steps of:

   inputting a crankshaft deflection between crank arms obtained by measuring a displacement on a crank throw corresponding to a piston;
   inputting a measured value of a bearing load obtained by lifting a part of the propeller shaft near a bearing, the propeller shaft rotating a propeller;
   setting temporarily installation heights as data regarding bearings other than a reference bearing at a reference installation height on the crankshaft and the propeller shaft;
   calculating crankshaft deflection on each crank throw and a bearing load on the propeller shaft by using transfer-matrix method based on the temporary installation heights;

calculating an evaluation value based on a difference between the calculated deflection value and the measured deflection value and a difference between a calculated bearing load value obtained in the calculating step and the measured bearing load value;

deciding whether an evaluation value calculated in the calculating step is within a permissible range or not; and producing another temporary installation heights by using a genetic algorithm when the deciding step decides that the evaluation value is out of the permissible range, and

the step of calculating crankshaft deflection and a bearing load is performed based on the newly produced temporary installation heights, the step of producing temporary installation heights by using the genetic algorithm is repeated until the evaluation value enters the permissible range, and a temporary installation height is detected as an installation height of the crankshaft when an evaluation value is within the permissible range.

2. The method of detecting an installation height of a driving shaft system according to claim 1, wherein the steps of setting a temporary installation height of the bearing to deciding an evaluation value are repeated for a plurality of times,

when temporary installing heights are set, at an initial calculation, a set height range of installation heights and a height interval are set widely relative to the reference height of the reference bearing, and the permissible range for making decision in the deciding step is also set widely, and

at a subsequent calculation, the height range of installation heights, the height interval and the permissible range all set in the previous calculation are set narrower to calculate an installation height.

3. A detector for detecting an installation height of a driving shaft system in a marine propulsion device comprising a propeller and an engine for a ship having a plurality of pistons arranged in series, wherein the detector comprises:

crankshaft deflection measuring means for measuring a displacement between crank arms on each crank throw in the engine;

bearing load measuring means for measuring a bearing load on a bearing for supporting a propeller shaft;

temporary installation height setting means for temporarily setting installation heights of a crankshaft and the propeller shaft as data;

deflection/load calculating means for calculating crankshaft deflection serving as a displacement between the crank arms on each crank throw and the bearing load of the bearing on the propeller shaft based on the temporary installation heights obtained by the temporary installation height setting means by using a transfer-matrix method;

evaluation value calculating means for calculating an evaluation value based on a difference between the calculated deflection value obtained by the deflection/load calculating means and the measured deflection value obtained by the crankshaft deflection measuring means and a difference between the calculated bearing load value obtained by the deflection/load calculating means and the measured bearing load value obtained by the bearing load measuring means;

deciding means for deciding whether or not the evaluation value obtained by the evaluation value calculating means is within a permissible range and deciding that the temporary installation heights are positioned at the installation heights of the crankshaft and the propeller shaft when the evaluation value is within the permissible range; and

installation height producing means for producing another temporary installation heights by performing a genetic algorithm on the temporary installation heights when the deciding means decides that the evaluation value is out of the permissible range, and

when the installation height producing means produces another temporary installation heights, a calculated deflection value and a calculated bearing load value are obtained by using the temporary installation heights, and the step of producing temporary installation heights by using the genetic algorithm is repeated until the evaluation value enters the permissible range, the evaluation value being based on the difference between the calculated deflection value and the measured deflection value and the difference between the calculated bearing load value and the measured bearing load value.

4. The detector for detecting an installation height of a driving shaft system according to claim 3, wherein the detector further comprises:

parameter setting means for setting a set height range and a height interval when the temporary installation height setting means sets temporary installation heights and setting a permissible range for deciding an evaluation value of the installation heights;

final deciding means for further deciding whether or not the evaluation value is within the target permissible range when the deciding means decides that the evaluation value is within the permissible range; and repeating means for repeating, a plurality of times, the steps of setting temporary installation heights by the temporary installation height setting means to deciding the evaluation value by the final deciding means, when the final deciding means decides that the evaluation value is out of the target permissible range, and

when the temporary installation height setting means sets temporary installation heights, at an initial calculation, a set height range of installation heights and a height interval are set widely relative to the reference height of the reference bearing by the parameter setting means, and the permissible range for decision by the deciding means is similarly set widely, and

at a subsequent calculation, the height range of installation heights, the height interval and the permissible range all set in the previous calculation are set narrower to calculate an installation height.

5. A program for detecting an installation height of a driving shaft system in a marine propulsion device comprising a propeller shaft and an engine for a ship having a plurality of pistons arranged in series, the program causing a computer device to calculate an installation height of the driving shaft system based on a crankshaft deflection between crank arms and on a load of a bearing for supporting the propeller shaft, wherein the program comprises:

an inputting step of inputting a measured value of crankshaft deflection and a measured value of a bearing load of the bearing on the propeller shaft, the crankshaft deflection serving as a displacement between the crank arms and being actually measured on crank throws corresponding to pistons;

a temporary installation height setting step of setting temporarily installation heights of the bearings other than a reference bearing at a reference installation height on the crankshaft and the propeller shaft;

a deflection/load calculating step of calculating crankshaft deflection on each crank throw and a bearing load by using a transfer-matrix method based on the temporary installation heights set in the temporary installation height setting step;

an evaluation value calculating step of calculating an evaluation value based on a difference between a calculated deflection value obtained in the deflection/load calculating step and the measured and inputted deflection value and a difference between a calculated bearing load obtained by the calculating section and the measured and inputted bearing load;

a deciding step of deciding whether or not the evaluation value calculated in the evaluation value calculating step is within a permissible range;

an installation height producing step of newly producing temporary installation heights by using a genetic algorithm when the deciding step decides that the evaluation value is out of the permissible range; and

a command step of permitting the deflection/load calculating step to calculate crankshaft deflection and a bearing load based on the newly produced temporary installation heights to repeat the step of newly producing temporary installation heights by using the genetic algorithm in the installation height producing step until the evaluation value enters the permissible range.

6. The program for detecting an installation height of the driving shaft system according to claim 5, wherein the program further comprises:

a parameter setting step of setting a set height range and a height interval when temporary installation heights are set in the temporary installation height setting step, and a permissible range when decision is made on an evaluation value of installation heights;

a final deciding step of further deciding whether or not the evaluation value is within a target permissible range when the deciding step decides that the evaluation value is within the permissible range; and

repeating step of repeating, a plurality of times, the steps of setting temporary installation heights by the temporary installation height setting step to deciding the evaluation value in the final deciding step, when the final deciding step decides that the evaluation value is out of the target permissible range, and

when temporary installation heights are set in the temporary installation height setting step, at an initial calculation, a set height range of installation heights and a height interval are set widely relative to the reference height of the reference bearing in the parameter setting step, and the permissible range for decision in the deciding step is similarly set widely, and

at a subsequent calculation, the set height range of installation heights, the height interval and the permissible range all set in the previous calculation are set narrower.

**Patentansprüche**

1. Verfahren zur Erkennung der Einbauhöhe der Antriebswelle in einer Schiffsantriebseinheit mit einer Schraubenwelle und einem Schiffsmotor, welcher mehrere in Reihe angeordnete Kolben aufweist, wobei das Verfahren folgende Schritte umfasst:

   die Eingabe einer Kurbelwellendurchbiegung zwischen Kurbelwangen, welche durch Messung eines Versatzes an einer einem Kolben zugeordneten Kurbelwellenkröpfung erlangt wurde;
   Eingabe eines gemessenen Wertes einer Lagerbelastung, welcher durch Anheben eines Teiles der die Schiffsschraube drehenden Schraubenwelle nahe eines Lagers erzeugt wurde;
   temporäre Einstellung von Einbauhöhen in Form von Daten in Bezug auf Lager, welche von einem Referenzlager in einer Referenzeinbauhöhe an der Kurbelwelle und der Schraubenwelle abweichen;
   Berechnung der Kurbelwellendurchbiegung an jeder Kurbelwellenkröpfung und einer Lagerbelastung an der Schraubenwelle durch Einsatz der Übergangsmatrixmethode, basierend auf den temporären Einbauhöhen;
   Berechnung eines Auswertebetrages auf Basis einer Differenz zwischen dem berechneten Durchbiegungswert und dem gemessenen Durchbiegungswert und einer Differenz zwischen einer in dem Berechnungsschritt berechneten Lagerbelastungswert und dem gemessenen Lagerbelastungswert;
   Entscheidung, ob ein in dem Berechnungsschritt berechneter Auswertebetrag innerhalb oder nicht innerhalb eines zulässigen Bereiches liegt; und
   Erzeugung weiterer temporärer Einbauhöhen durch Einsatz eines genetischen Algorithmus wenn der Entscheidungsschritt ergibt, dass der Auswertebetrag außerhalb des zulässigen Bereiches liegt, und
   Berechnung der Kurbelwellendurchbiegung, wobei eine Lagerbelastung, basierend auf neuerlich erzeugten temporären Einbauhöhen, ausgeübt wird, und wobei die Erzeugung temporärer Einbauhöhen durch Einsatz des genetischen Algorithmus wiederholt wird, bis der Auswertebetrag in den zulässigen Bereich gelangt, und wobei eine temporäre Einbauhöhe als eine Einbauhöhe der Kurbelwelle erkannt wird, wenn der Auswertebetrag innerhalb des zulässigen Bereiches liegt.

2. Verfahren zur Erkennung der Einbauhöhe einer Antriebswelle gemäß Anspruch 1, wobei
   die Schritte zur Einstellung einer temporären Einbauhöhe des Lagers zur Entscheidung über einen Auswertebetrag zu mehreren Zeitpunkten wiederholt werden,
   dann, wenn in einer Anfangsberechnung temporäre Einbauhöhen eingestellt werden, der Höheneinstellbereich für die Einbauhöhen und das Höhenintervall relativ zu der Referenzhöhe des Referenzlagers ebenso wie der zulässige Bereich zur Entscheidung in dem Entscheidungsschritt weit eingestellt werden, und
   in einer anschließenden Berechnung zur Berechnung einer Einbauhöhe der in der vorhergehenden Berechnung eingestellte Höhenbereich der Einbauhöhen, das Höhenintervall und der zulässige Bereich enger eingestellt werden.

3. Detektor zur Erkennung der Einbauhöhe der Antriebswelle in einer Schiffsantriebseinheit mit einer Schiffsschraube und einem Schiffsmotor, welcher mehrere in Reihe angeordnete Kolben aufweist, wobei der Detektor umfasst:

   eine Messeinrichtung für Kurbelwellendurchbiegungen zum Messen eines Versatzes zwischen Kurbelwangen an jeder Kurbelwellenkröpfung des Motors;
   eine Messeinrichtung für Lagerbelastungen zum Messen einer Lagerbelastung an einem Lager zum Tragen einer Schraubenwelle;
   eine Einstelleinrichtung für temporäre Einbauhöhen zum temporären Einstellen von Einbauhöhen einer Kurbelwelle und der Schraubenwelle in Form von Daten;
   eine Berechnungseinrichtung für Durchbiegungen/Belastungen zur Berechnung der Kurbelwellendurchbiegung, wozu ein Versatz zwischen den Kurbelwangen an jeder Kurbelkröpfung und der Lagerbelastung des Lagers an der Schraubenwelle dient, basierend auf den durch die Einstellvorrichtung für temporäre Einbauhöhen erlangten temporären Einbauhöhen durch Einsatz einer Übergangsmatrixmethode;
   eine Berechnungseinrichtung für einen Auswertebetrag zur Berechnung eines Auswertebetrages auf Basis einer Differenz zwischen dem durch die Berechnungseinrichtung für Durchbiegungen/Belastungen berechneten Auswertebetrag und dem durch die Messeinrichtung für Kurbelwellendurchbiegungen gemessenen Durchbiegungswert und einer Differenz zwischen dem durch die Berechnungseinrichtung für Durchbiegungen/Belastungen berechneten Lagerbelastungswert und dem durch die Messeinrichtung für Lagerbelastungen gemessenen Lagerbelastungswert;
   eine Entscheidungseinrichtung zur Entscheidung, ob der von der Berechnungseinrichtung für einen Auswertebetrag erhaltene Auswertebetrag innerhalb oder nicht innerhalb eines zulässigen Bereiches liegt und, wenn der Auswertebetrag innerhalb des zulässigen Bereiches liegt, Entscheidung, dass die temporären Einbauhöhen der richtigen Lage der Einbauhöhen der Kurbelwelle und der Schraubenwelle entsprechen; und Erzeugungseinrichtung für Einbauhöhen zur Erzeugung weiterer temporärer Einbauhöhen durch einen genetischen Algorithmus auf den temporären Einbauhöhen, wenn die Entscheidungseinrichtung entscheidet, dass der Auswertebetrag außerhalb des zulässigen Bereiches liegt, und

wenn die Erzeugungseinrichtung für Einbauhöhen weitere temporäre Einbauhöhen erzeugt, werden durch Einsatz der temporären Einbauhöhen ein berechneter Durchbiegungswert und ein berechneter Lagerbelastungswert erlangt, und der Schritt zur Erzeugung temporärer Einbauhöhen wird durch Einsatz des genetischen Algorithmus wiederholt, bis der Auswertebetrag in den zulässigen Bereich gelangt, wobei der Auswertebetrag auf der Differenz zwischen dem berechneten Durchbiegungswert und dem gemessenen Durchbiegungswert und der Differenz zwischen der berechneten Lagerbelastung und der gemessenen Lagerbelastung basiert.

4. Detektor zur Erkennung der Einbauhöhe einer Antriebswelle gemäß Anspruch 3, wobei der Detektor weiterhin umfasst:

eine Parametereinstellvorrichtung zum Einstellen einer Höhenbereichsgruppe und eines Höhenintervalls, wenn die Einstelleinrichtung für temporäre Einbauhöhen temporäre Einbauhöhen und einen zulässigen Bereich zur Entscheidung eines Einbauhöhen-Auswertebetrages einstellt;

eine Einrichtung zur Endentscheidung zur weiteren Entscheidung, ob der Auswertebetrag innerhalb oder nicht innerhalb des geplanten zulässigen Bereiches liegt, wenn die Entscheidungseinrichtung entscheidet, dass der Auswertebetrag innerhalb des zulässigen Bereiches liegt; und

eine Wiederholungseinrichtung mit Wiederholung der Schritte zum Einstellen temporärer Einbauhöhen durch die Einstellvorrichtung für temporäre Einbauhöhen zu mehreren Zeitpunkten, um durch die Einrichtung zur Endentscheidung eine Entscheidung über den Auswertebetrag zu treffen, wenn die Einrichtung zur Endentscheidung entscheidet, dass der Auswertebetrag außerhalb des geplanten zulässigen Bereiches liegt, und wenn die Einstelleinrichtung für temporäre Einbauhöhen in einer Anfangsberechnung temporäre Einbauhöhen einstellt, werden eine Höhenbereichsgruppe von Einbauhöhen und ein Höhenintervall relativ zu der Referenzhöhe des Referenzlagers durch die Parametereinstellvorrichtung weit eingestellt und der zulässige Bereich zur Entscheidung durch die Entscheidungseinrichtung wird ähnlich weit eingestellt, und

in einer nachfolgenden Berechnung werden der Höhenbereich der Einbauhöhen, das Höhenintervall und der zulässige Bereich, welche alle in der vorherigen Berechnung eingestellt wurden, zur Berechnung einer Einbauhöhe enger eingestellt.

5. Programm zur Erkennung der Einbauhöhe einer Antriebswelle in einer Schiffsantriebseinheit, mit einer Schraubenwelle und einem Schiffsmotor, welcher mehrere in Reihe angeordnete Kolben aufweist, wobei das Programm einen Computer veranlasst, eine Einbauhöhe der Antriebswelle auf Basis einer Kurbelwellendurchbiegung zwischen Kurbelwangen und einer Belastung eines Lagers zum Tragen der Schraubenwelle zu berechnen, und wobei das Programm umfasst:

einen Eingabeschritt mit Eingabe eines gemessenen Wertes einer Kurbelwellendurchbiegung und eines gemessenen Wertes einer Lagerbelastung an dem Lager der Schraubenwelle, wobei der Versatz zwischen den Kurbelwangen, welcher an den den Kolben zugeordneten Kurbelwellenkröpfungen tatsächlich gemessen wurde, für die Kurbelwellendurchbiegung herangezogen wird;

einen Einstellschritt für eine temporäre Einbauhöhe mit Einstellung temporärer Einbauhöhen der Lager, abweichend von einem Referenzlager in einer Referenzeinbauhöhe an der Kurbelwelle und der Schraubenwelle;

einen Berechnungsschritt für Durchbiegungen/Belastungen mit Berechnung der Kurbelwellendurchbiegung an jeder Kurbelwellenkröpfung und einer Lagerbelastung durch Verwendung einer Übergangsmatrixmethode, basierend auf den in dem Einstellschritt für eine temporäre Einbauhöhen eingestellten temporären Einbauhöhen;

einen Berechnungsschritt für einen Auswertebetrag mit Berechnung eines Auswertebetrages auf Basis einer Differenz zwischen einem in dem Berechnungsschritt für Durchbiegungen/Belastungen berechneten Auswertebetrag und dem gemessenen und eingegebenen Durchbiegungswert und einer Differenz zwischen einer in dem Berechnungsabschnitt berechneten Lagerbelastung und der gemessenen und eingegebenen Lagerbelastung;

einen Entscheidungsschritt mit Entscheidung, ob der in dem Berechnungsschritt für einen Auswertebetrag berechnete Auswertebetrag innerhalb oder nicht innerhalb eines zulässigen Bereiches liegt;

einen Erzeugungsschritt für Einbauhöhen mit Erzeugung neuerlicher temporärer Einbauhöhen durch Einsatz eines genetischen Algorithmus, wenn im Entscheidungsschritt entschieden wird, dass der Auswertebetrag außerhalb des zulässigen Bereiches liegt; und

einen Befehlsschritt der es dem Berechnungsschritt für Durchbiegungen/Belastungen erlaubt, die Kurbelwellendurchbiegung und eine Lagerbelastung basierend auf erneut erzeugten temporären Einbauhöhen zu berechnen und den Schritt zur Erzeugung erneuter temporärer Einbauhöhen durch Einsatz des genetischen Algorithmus in dem Schritt zur Erzeugung von Einbauhöhen zu wiederholen, bis der Auswertebetrag in den zulässigen Bereich gelangt.

6. Programm zur Erkennung der Einbauhöhe der Antriebswelle gemäß Anspruch 5, wobei das Programm weiterhin umfasst:

einen Parametereinstellschritt mit Einstellung einer Höhenbereichsgruppe und eines Höhenintervalls, wenn im Einstellschritt für temporäre Einbauhöhen temporären Einbauhöhen eingestellt sind, und eines zulässigen Bereiches, wenn die Entscheidung über einen Einbauhöhen-Auswertebetrag gefallen ist;
einen abschließenden Entscheidungsschritt mit der weiteren Entscheidung, ob der Auswertebetrag innerhalb oder nicht innerhalb eines geplanten zulässigen Bereiches liegt, wenn der Entscheidungsschritt zu der Entscheidung führt, dass der Auswertebetrag innerhalb des zulässigen Bereiches liegt; und
einen Wiederholungsschritt mit Wiederholung der Schritte zum Einstellen temporärer Einbauhöhen durch den Einstellschritt für temporäre Einbauhöhen zu mehreren Zeitpunkten, um durch den abschließenden Entscheidungsschritt eine Entscheidung über den Auswertebetrag zu treffen, wenn der abschließende Entscheidungsschritt entscheidet, dass der Auswertebetrag außerhalb des geplanten zulässigen Bereiches liegt, und wenn in dem Einstellschritt für temporäre Einbauhöhen in einer Anfangsberechnung temporäre Einbauhöhen eingestellt werden, werden eine Höhenbereichsgruppe von Einbauhöhen und ein Höhenintervall relativ zu der Referenzhöhe des Referenzlagers in dem Parametereinstellschritt weit eingestellt und der zulässige Bereich zur Entscheidung in dem Entscheidungsschritt wird ähnlich weit eingestellt, und in einer nachfolgenden Berechnung werden der Höhenbereich der Einbauhöhen, das Höhenintervall und der zulässige Bereich, welche alle in der vorherigen Berechnung eingestellt wurden, enger eingestellt.

**Revendications**

1. Procédé de détection d'une hauteur d'installation d'un système d'arbre d'entraînement dans un dispositif de propulsion marine comprenant un arbre d'hélice et un moteur pour bateau, ayant une plura.lité de pistons agencés en série, dans lequel le procédé comprend les étapes consistant à :

entrer une flexion de vilebrequin entre des bras de manivelle obtenue en mesurant un déplacement sur une manivelle de vilebrequin correspondant à un piston ;
entrer une valeur mesurée d'une charge de palier obtenue en relevant une partie de l'arbre d'hélice à proximité d'un palier, l'arbre d'hélice mettant une hélice en rotation ;
régler temporairement des hauteurs d'installation, à titre de données relatives à des paliers autres qu'un palier de référence, à une hauteur d'installation de référence sur le vilebrequin et l'arbre d'hélice ;
calculer une flexion de vilebrequin sur chaque manivelle de vilebrequin et une charge de palier sur l'arbre d'hélice en utilisant un procédé de matrice de transfert sur la base des hauteurs d'installation temporaires ;
calculer une valeur d'évaluation sur la base d'une différence entre la valeur de flexion calculée et la valeur de flexion mesurée ainsi que d'une différence entre une valeur de charge de palier calculée, obtenue au cours de l'étape de calcul, et la valeur de charge de palier mesurée ;
décider si une valeur d'évaluation calculée au cours de l'étape de calcul se situe ou non à l'intérieur d'une plage admissible ; et
produire d'autres hauteurs d'installation temporaires en utilisant un algorithme génétique lorsque l'étape de décision décide que la valeur d'évaluation se situe hors de la plage admissible, et
l'étape de calcul de flexion de vilebrequin et de charge de palier est exécutée sur la base des hauteurs d'installation temporaires nouvellement produites, l'étape de production de hauteurs d'installation temporaires en utilisant l'algorithme génétique est répétée jusqu'à ce que la valeur d'évaluation entre dans la plage admissible, et une hauteur d'installation temporaire est détectée à titre de hauteur d'installation du vilebrequin quand une valeur d'évaluation se situe à l'intérieur de la plage admissible.

2. Procédé de détection d'une hauteur d'installation d'un système d'arbre d'entraînement selon la revendication 1, dans lequel
les étapes de réglage d'une hauteur d'installation temporaire du palier de façon à prendre une décision relative à une valeur d'évaluation sont répétées une pluralité de fois,

quand des hauteurs d'installation temporaires sont réglées, lors d'un calcul initial, une plage de hauteurs réglées pour des hauteurs d'installation et un intervalle de hauteurs sont réglés de façon large par rapport à la hauteur de référence du palier de référence, et la plage admissible pour prendre une décision au cours de l'étape de décision est également réglée de façon large, et

lors d'un calcul ultérieur, la plage de hauteurs pour des hauteurs d'installation, l'intervalle de hauteurs et la plage admissible, tous réglés pendant le précédent calcul, sont réglés plus étroitement de façon à calculer une hauteur d'installation.

**3.** Détecteur pour détecter une hauteur d'installation d'un système d'arbre d'entraînement dans un dispositif de propulsion marine comprenant un arbre d'hélice et un moteur pour bateau, ayant une pluralité de pistons agencés en série, dans lequel le détecteur comprend :

des moyens de mesure de flexion de vilebrequin destinés à mesurer un déplacement entre des bras de manivelle sur chaque manivelle de vilebrequin dans le moteur ;

des moyens de mesure de charge de palier destinés à mesurer une charge de palier sur un palier conçu pour soutenir un arbre d'hélice ;

des moyens de réglage de hauteurs d'installation temporaires destinés à régler temporairement des hauteurs d'installation d'un vilebrequin et de l'arbre d'hélice à titre de données ;

des moyens de calcul de flexion/charge destinés à calculer une flexion de vilebrequin servant en tant que déplacement entre les bras de manivelle sur chaque manivelle de vilebrequin, ainsi que la charge de palier du palier sur l'arbre d'hélice sur la base des hauteurs d'installation temporaires obtenues par les moyens de réglage de hauteurs d'installation temporaires en utilisant un procédé de matrice de transfert ;

des moyens de calcul de valeur d'évaluation destinés à calculer une valeur d'évaluation sur la base d'une différence entre la valeur de flexion calculée, obtenue par les moyens de calcul de flexion/charge, et la valeur de flexion mesurée, obtenue par les moyens de mesure de flexion de vilebrequin, ainsi que d'une différence entre la valeur de charge de palier calculée, obtenue par les moyens de calcul de flexion/charge, et la valeur de charge de palier mesurée, obtenue par les moyens de mesure de charge de palier ;

des moyens de décision destinés à décider si la valeur d'évaluation obtenue par les moyens de calcul de valeur d'évaluation se situe ou non à l'intérieur d'une plage admissible et à décider si les hauteurs d'installation temporaires sont positionnées au niveau des hauteurs d'installation du vilebrequin et de l'arbre d'hélice quand la valeur d'évaluation se situe à l'intérieur de la plage admissible ; et

des moyens de production de hauteurs d'installation destinés à produire d'autres hauteurs d'installation temporaires en exécutant un algorithme génétique sur les hauteurs d'installation temporaires lorsque les moyens de décision décident que la valeur d'évaluation se situe hors de la plage admissible, et

quand les moyens de production de hauteurs d'installation produisent d'autres hauteurs d'installation temporaires, une valeur de flexion calculée et une valeur de charge de palier calculée sont obtenues en utilisant les hauteurs d'installation temporaires, et l'étape de production de hauteurs d'installation temporaires en utilisant l'algorithme génétique est répétée jusqu'à ce que la valeur d'évaluation entre dans la plage admissible, la valeur d'évaluation étant basée sur la différence entre la valeur de flexion calculée et la valeur de flexion mesurée ainsi que sur la différence entre la valeur de charge de palier calculée et la valeur de charge de palier mesurée.

**4.** Détecteur pour détecter une hauteur d'installation d'un système d'arbre d'entraînement selon la revendication 3, dans lequel le détecteur comprend en outre :

des moyens de réglage de paramètres destinés à régler une plage de hauteurs réglées et un intervalle de hauteurs quand les moyens de réglage de hauteurs d'installation tempora.ires règlent les hauteurs d'installation temporaires et à régler une plage admissible pour prendre une décision relative à une valeur d'évaluation des hauteurs d'installation ;

des moyens de décision finale destinés à décider plus précisément si la valeur d'évaluation se situe ou non à l'intérieur de la plage admissible cible quand les moyens de décision décident que la valeur d'évaluation se situe à l'intérieur de la plage admissible ; et

des moyens de répétition destinés à répéter une pluralité de fois les étapes de réglage de hauteurs d'installation temporaires par les moyens de réglage de hauteurs d'installation temporaires afin de prendre une décision relative à la valeur d'évaluation à l'aide des moyens de décision finale, quand les moyens de décision finale décident que la valeur d'évaluation se situe hors de la plage admissible cible, et

quand les moyens de réglage de hauteurs d'installation temporaires règlent des hauteurs d'installation temporaires lors d'un calcul initial, une plage de hauteurs réglées pour des hauteurs d'installation et un intervalle de hauteurs sont réglés de façon large par rapport à la hauteur de référence du palier de référence par les moyens de réglage de paramètres, et la plage admissible pour une décision par les moyens de décision est, de même, réglée de façon large, et

lors d'un calcul ultérieur, la plage de hauteurs pour des hauteurs d'installation, l'intervalle de hauteurs et la plage admissible, tous réglés durant le précédent calcul, sont réglés plus étroitement de façon à calculer une hauteur d'installation.

**5.** Programme de détection d'une hauteur d'installation d'un système d'arbre d'entraînement dans un dispositif de propulsion marine comprenant un arbre d'hélice et un moteur pour bateau, ayant une pluralité de pistons agencés en série, le programme amenant un dispositif informatique à calculer une hauteur d'installation du système d'arbre d'entraînement sur la base d'une flexion de vilebrequin entre des bras de manivelle et d'une charge d'un palier conçu pour soutenir l'arbre d'hélice, dans lequel le programme comprend :

une étape d'entrée consistant à entrer une valeur mesurée d'une flexion de vilebrequin et une valeur mesurée d'une charge de palier du palier sur l'arbre d'hélice, la flexion de vilebrequin correspondant au déplacement entre les bras de manivelle et étant en réalité mesurée sur les manivelles de vilebrequin correspondant aux pistons ;

une étape de réglage de hauteur d'installation temporaire consistant à régler teznporairement des hauteurs d'installation des paliers autres qu'un palier de référence à une hauteur d'installation de référence sur le vilebrequin et l'arbre d'hélice ;

une étape de calcul de flexion/charge consistant à calculer une flexion de vilebrequin sur chaque manivelle de vilebrequin et une charge de palier en utilisant un procédé de matrice de transfert sur la base des hauteurs d'installation temporaires réglées au cours de l'étape de réglage de hauteurs d'installation temporaires ;

une étape de calcul de valeur d'évaluation consistant à calculer une valeur d'évaluation sur la base d'une différence entre une valeur de flexion calculée, obtenue au cours de l'étape de calcul de flexion/charge et la valeur de flexion mesurée et entrée ainsi que d'une différence entre une charge de palier calculée, obtenue par la section de calcul, et la charge de palier mesurée et entrée ;

une étape de décision consistant à décider si la valeur d'évaluation calculée au cours de l'étape de calcul de valeur d'évaluation se situe ou non à l'intérieur d'une plage admissible ;

une étape de production de hauteur d'installation consistant à produire de nouvelles hauteurs d'installation temporaires en utilisant un algorithme génétique lorsque l'étape de décision décide que la valeur d'évaluation se situe hors de la plage admissible ; et

une étape de commande consistant à autoriser l'étape de calcul de flexion/charge à calculer une flexion de vilebrequin et une charge de palier sur la base des hauteurs d'installation temporaires nouvellement produites de façon à répéter l'étape de production de nouvelles hauteurs d'installation temporaires en utilisant l'algorithme génétique au cours de l'étape de production de hauteurs d'installation jusqu'à ce que la valeur d'évaluation entre dans la plage admissible.

**6.** Programme de détection d'une hauteur d'installation du système d'arbre d'entraînement selon la revendication 5, dans lequel le programme comprend en outre :

une étape de réglage de paramètres consistant à régler une plage de hauteurs réglées et un intervalle de hauteurs quand les hauteurs d'installation temporaires sont réglées au cours de l'étape de réglage de hauteurs d'installation temporaires, et une plage admissible quand une décision est prise sur une valeur d'évaluation des hauteurs d'installation ;

une étape de décision finale consistant à décider plus précisément si la valeur d'évaluation se situe ou non à l'intérieur d'une plage admissible cible quand l'étape de décision décide que la valeur d'évaluation se situe à l'intérieur de la plage admissible ; et

une étape de répétition consistant à répéter une pluralité de fois les étapes de réglage de hauteurs d'installation temporaires par l'étape de réglage de hauteur d'installation temporaire de façon à prendre une décision relative à la valeur d'évaluation au cours de l'étape de décision finale, quand l'étape de décision finale décide que la valeur d'évaluation se situe hors de la plage admissible cible, et

quand des hauteurs d'installation temporaires sont réglées au cours de l'étape de réglage de hauteurs d'installation temporaires, lors d'un calcul initial, une plage de hauteurs réglées pour des hauteurs d'installation et un intervalle de hauteurs sont réglés de façon large par rapport à la hauteur de référence du palier de référence pendant l'étape de réglage de paramètres, et la plage admissible pour une décision au cours de l'étape de décision est, de même, réglée de façon large, et

lors d'un calcul ultérieur, la plage de hauteurs réglées pour des hauteurs d'installation, l'intervalle de hauteurs et la plage admissible, tous réglés durant le précédent calcul, sont réglés plus étroitement.

FIG. 1

# F I G. 2

# F I G. 3

# F I G. 4

27

# F I G. 5

# F I G. 6

# F I G. 7

FIG. 8

# FIG. 9

Fore

Aft

x
y
z

# FIG. 10

# FIG. 11

EP 1 384 974 B1

# F I G. 1 2

STEP 1 | SPECIFICATION DATA ON ENGINE AND PROPELLER SHAFT

MEASURED VALUE OF CRANK DEFLECTION

MEASURED VALUE OF BEARING LORD

STEP 2 | SET RELATIVE INSTALLATION HEIGHTS OF ALL BEARINGS AT 0 (INITIAL SETTING)

STEP 3 | n = 1

STEP 4 | INPUT SET HEIGHT RANGE, HEIGHT INTERVAL, AND PERMISSIBLE VALUE AT Nth TIME

STEP 5 | SET TEMPORARY INSTALLATION HEIGHT (GENERATE ARBITRARY INSTALLATION HEIGHT BY RANDOM FUNCTION)

STEP 6 | PERFORM THEORETICAL OPERATION ON CRANK DEFLECTION AND BEARING LOAD (BASED ON TRANSFER-MATRIX METHOD)

STEP 7 | CALCULATE EVALUATION VALUE OF CALCULATED VALUE RELATIVE TO MEASURED VALUES OF CRANK DEFLECTION AND BEARING LOAD

STEP 8 | EVALUATION VALUE >PERMISSIBLE VALUE (n)

STEP 9 | PRODUCE NEXT-GENERATION GROUP OF INSTALLATION HEIGHT (PRODUCED BY GENETIC ALGORITHM)

STEP 10 | EVALUATION VALUE >FINAL PERMISSIBLE VALUE

STEP 11 | n = n + 1

INSTALLATION HEIGHT SATISFYING PERMISSIBLE VALUE

34

# F I G. 1 3